(19) Europäisches Patentamt
European Patent Office
Office européen des brevets

(11) **EP 4 044 094 A1**

(12) **EUROPEAN PATENT APPLICATION**

(43) Date of publication:
**17.08.2022 Bulletin 2022/33**

(21) Application number: **22157068.2**

(22) Date of filing: **16.02.2022**

(51) International Patent Classification (IPC):
**G06Q 30/02** (2012.01)    **G06N 20/00** (2019.01)

(52) Cooperative Patent Classification (CPC):
**G06Q 30/0201; G06N 20/00; G06Q 30/0282**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.02.2021 US 202117176271
03.05.2021 US 202117306397
26.10.2021 US 202117510656**

(71) Applicant: **RepTrak Holdings, Inc.
Boston, MA 02116 (US)**

(72) Inventors:
• **LITVAK-HINENZON, Anna
Boston, 02116 (US)**
• **LAING, Andrew
Boston, 02116 (US)**
• **FOMBRUN, Charles
Boston, 02116 (US)**
• **WRIGHT-FORD, Kylie
Boston, 02116 (US)**
• **HASELTINE, Mark
Boston, 02116 (US)**
• **ULF NIELSEN, Kasper
Boston, 02116 (US)**
• **GEORGES TRAD, Nicolas
Boston, 02116 (US)**
• **VAN RIEL, Cees
Boston, 02116 (US)**

(74) Representative: **Mewburn Ellis LLP
Aurora Building
Counterslip
Bristol BS1 6BX (GB)**

(54) **SYSTEM AND METHOD FOR DETERMINING AND MANAGING REPUTATION OF ENTITIES AND INDUSTRIES THROUGH USE OF MEDIA DATA**

(57) Determining entity reputation from at least one media data source includes using at least one of a text analysis model and a text mining model to determine if a sentiment toward an entity is positive, negative, or neutral by use of at least one media data point in at least one media data source and assigning a sentiment numerical value to the point based on whether the determined sentiment toward the entity is positive, negative, or neutral; determining at least one media reputation score of the entity; training a classification model to associate at least one media data point with at least one media reputation driver; using the model to associate at least one media data point with the driver, or determine the point cannot be associated with drivers; and determining an entity media reputation driver score for each of the drivers based on the media data source.

**FIG. 1**

**Description**

**CROSS-REFERENCE TO RELATED APPLICATIONS**

This application is a continuation-in-part of U.S. Patent Application serial number 17/176,271, filed February 16, 2021, entitled "System and Method For Determining And Managing Reputation Of Entities And Industries," and a continuation-in-part of U.S. Patent Application serial number 17/306,397, filed May 3, 2021, entitled "System and Method For Determining and Managing Reputation of Entities and Industries Through Use Of Behavioral Connections," both of which are incorporated by reference herein in its entirety.

**FIELD OF THE INVENTION**

The present invention generally relates to effective determination of entity and industry reputations, and, more particularly, to systems and methods that provide realistic and accurate determination of the ability of an entity to deliver on stakeholder expectations through use of media data.

**BACKGROUND OF THE INVENTION**

It is vital for companies, brands, and corporations to manage their reputation. The reputation of a corporation is a measure of how society views the corporation and provides a good measure of public expectation that the corporation has the basic ability to fulfill the expectations of a current or potential consumer. Reputation of a corporation bears weight on a number of important factors. For example, a strong reputation of a corporation will increase chances of obtaining and maintaining a loyal customer base, resulting in increased sales and being able to charge a premium for items sold. Strong corporate reputation also allows for a stronger current and potential employee pool. A strong reputation also increases chances that a potential purchaser will commit to a purchase, and a potential investor will commit to an investment.

Reputation is especially important in e-commerce, where products are being purchased online and the benefit of face to face encounter and interaction is uncommon. In addition, the e-commerce world removes the personal brick and mortar experience, making interaction during purchasing less personal, thereby making reputation even more important since live interaction cannot be relied upon to entice current and potential customers.

Reputation determination currently is inaccurately measured, using unrealizable data that tends to be biased and self-serving. A more reliable system and method is required to be provided for accurately measuring and managing reputation of entities and industries so as to allow for adjustment to improve reputation, thereby benefitting the entity, as well as enhancing consumer experience.

**SUMMARY OF THE INVENTION**

Embodiments of the present invention provide a system and method for determining reputation of an entity from at least one media data source. Referring to the method, the method comprises the steps of: using at least one of the group consisting of a text analysis model and a text mining model to determine if a sentiment toward an entity for which reputation is sought is positive, negative, or neutral by use of at least one media data point in at least one media data source, wherein a sentiment is an emotion about the entity portrayed by the at least one media data point, and assigning a sentiment numerical value to the at least one media data point based on whether the determined sentiment toward the entity is positive, negative, or neutral; determining at least one media reputation score of the entity for which reputation is sought, wherein the media reputation score is a measure of emotion portrayed about the entity in the media; training a classification model so that the classification model will associate at least one media data point with at least one media reputation driver, where a media reputation driver is a driver of reputation that is considered when assessing media reputation of the entity for which reputation is sought; using the classification model to associate at least one media data point with the at least one media reputation driver, or determine that the at least one media data point cannot be associated with any of the at least one media reputation drivers; and determining an entity media reputation driver score for each of the at least one media reputation drivers based on the at least one media data source.

Other systems, methods and features of the present invention will be or become apparent to one having ordinary skill in the art upon examining the following drawings and detailed description. It is intended that all such additional systems, methods, and features be included in this description, be within the scope of the present invention and protected by the accompanying claims.

**BRIEF DESCRIPTION OF THE DRAWINGS**

The accompanying drawings are included to provide a further understanding of the invention, and are incorporated in and constitute a part of this specification. The components in the drawings are not necessarily to scale, emphasis instead being placed upon clearly illustrating the principles of the present invention. The drawings illustrate embodiments of the invention and, together with the description, serve to explain the principals of the invention.

FIG. 1 is a schematic illustration of a network in which the present system and method may be provided.

FIG. 2 is a schematic diagram further illustrating the reputation server of FIG. 1 in accordance with one exemplary embodiment of the invention.

FIG. 3 is a schematic diagram further illustrating modules within the memory of FIG. 2 that are used to perform functionality of the reputation server in accordance with the present invention.

FIG. 4 is a flowchart exemplifying steps taken in accordance with the present system and method to determining and managing reputations of entities and industries.

FIG. 5 is a flowchart further illustrating steps taken in obtaining the data and cleaning the data.

FIG. 6 is a flowchart further illustrating steps taken in obtaining a reputation perception score.

FIG. 7 is a flowchart illustrating steps taken in deriving the reputation factor score associated with the entity for which reputation is to be measured.

FIG. 8 is a flowchart illustrating steps taken in determining reputation driver scores.

FIG. 9 is a flowchart illustrating steps taken in deriving the behavioral connection score associated with the entity for which reputation is to be measured.

FIG. 10 is a flowchart further illustrating steps taken by the behavioral connection module in predicting or inferencing the behavioral connection scores from the combinations of scores.

FIG. 11 is a flow chart illustrating steps taken by the present media data management module for purposes of determining reputation of an entity through use of at least one media source.

FIG. 12 is a flowchart further illustrating the step of the NLP model being trained.

FIG. 13 is a flowchart further illustrating the step of performing data annotation for sentiment classification.

FIG. 14 illustrates the step of predicting entity-based sentiment with the trained NLP model.

FIG. 15 is flowchart further illustrating the step of calculating and storing media reputation scores, of FIG. 11.

FIG. 16 is a flowchart further illustrating steps taken in training the NLP machine learning model.

FIG. 17 is a flowchart further illustrating the step of performing data annotation for reputation driver labelling.

FIG. 18 is a flowchart illustrating prediction of reputation driver classification of associated KWIC data.

FIG. 19 is a flowchart further illustrating the step of calculating and storing media reputation driver scores of FIG. 11.

FIG. 20 is a flowchart illustrating how to predict media reputation to perception reputation impact through use of a supervised machine learning model.

FIG. 21 is a flowchart illustrating how to predict perception reputation to media reputation impact through use of a supervised machine learning model.

**DETAILED DESCRIPTION**

The present system and method provides a reliable measure of reputation for an entity or industry, and allows for reputation management in a manner that is most efficient, where specific adjustments that would be most effective toward increasing reputation are highlighted so as to provide the entity or industry with guidance for improving reputation. It should be noted that an entity may be any of, but not limited to, a corporation, company, individual, or a group of individuals functioning under one name or label.

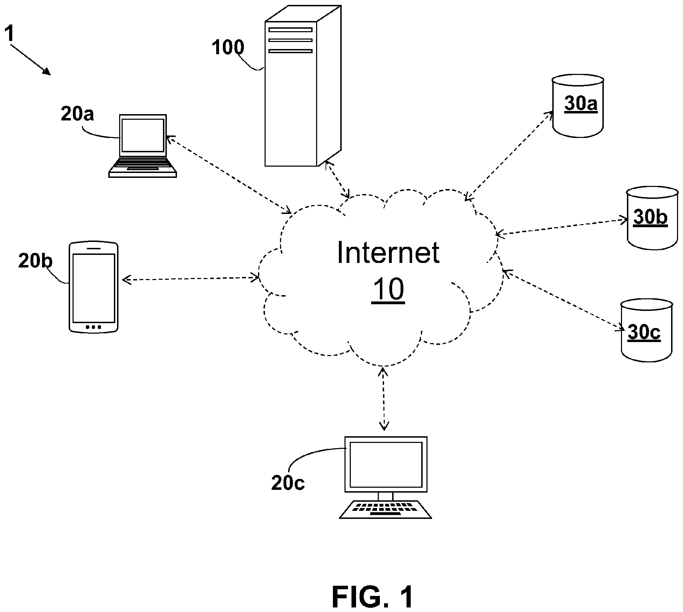

The present system and method may be provided in the network 1 illustrated by the schematic diagram of FIG. 1. A reputation server 100 may contain a reputation engine therein, for defining functionality performed by the present reputation determining and managing system and method, as will be described in detail herein. A consumer interacting with the present system and method can communicate with the reputation server 100 via the internet through use of a user device such as, but not limited to a laptop 20a, a cell phone 20b, or a desktop computer 20c. Such devices 20a-20c allow a user to interact with the reputation server 100 through use of a graphical user interface or other method that will allow a user to sign into the reputation server 100, enter necessary information and retrieve requested information, such as a reputation score, driver scores, and weights of driver scores, through, for example, a web site, or directly through interaction with a software application stored on the user device 20a-20c, or by other means. Information retrieved from and provided to the reputation server 100 will be described in additional detail herein. It should be noted that the user device 20 may be a different device, such as, but not limited to, an i-pad, smart watch, or other device.

As shown by FIG. 1, one or more database 30a-30c may be provided for storing data from and/or providing data to the reputation server 100, as described herein. While three databases are illustrated by FIG. 1, one having ordinary skill in the art will appreciate that fewer or more databases may be provided. It will also be appreciated that such remote storage may be cloud storage or another form of remote storage.

Functionality as performed by the present reputation assessment and management system and method is defined by modules within the reputation server 100. The modules may be provided together as a reputation engine consisting of the modules, or in multiple locations within a single or more than one machine. For example, in hardware, the functionality of the modules can be implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc. The modules can also be provided as software modules of a reputation engine, where the reputation engine comprises a processor and a memory having software modules therein defining functionality to be performed by the present system and method.

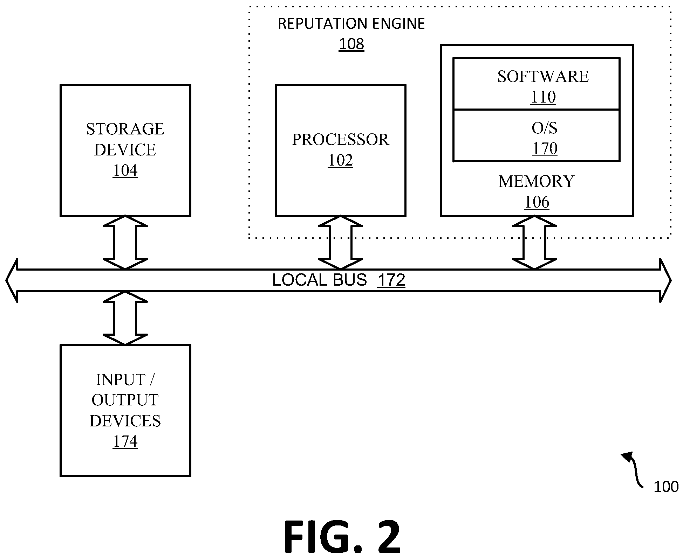

Referring to an embodiment where the reputation engine comprises a memory having software modules therein defining functionality to be performed by the present system and method, as shown by FIG. 2, the reputation server 100 contains a processor 102, a local storage device 104, a memory 106 having software 110 stored therein that defines the reputation engine functionality, input and output (I/O) devices 174 (or peripherals), and a local bus, or local interface 172 allowing for communication within the reputation server 100. The combination of the processor 102 and the memory 106 may also be referred to as the reputation engine 108. The local interface 172 can be, for example but not limited to, one or more buses or other wired or wireless connections, as is known in the art. The local interface 172 may have additional elements, which are omitted for simplicity, such as controllers, buffers (caches), drivers, repeaters, and receivers, to enable communications. Further, the local interface 172 may include address, control, and/or data connections to enable appropriate communications among the aforementioned components.

The processor 102 is a hardware device for executing software, particularly that stored in the memory 106. The processor 102 can be any custom made or commercially available single core or multi-core processor, a central processing unit (CPU), a Graphics processing unit (GPU), an auxiliary processor among several processors associated with the present reputation server 100, a semiconductor-based microprocessor (in the form of a microchip or chip set), a microprocessor, or generally any device for executing software instructions.

The memory 106 can include any one or combination of volatile memory elements (e.g., random access memory (RAM, such as DRAM, SRAM, SDRAM, etc.) and nonvolatile memory elements (e.g., ROM, hard drive, tape, CDROM, etc.). Moreover, the memory 106 may incorporate electronic, magnetic, optical, and/or other types of storage media. Note that the memory 106 can have a distributed architecture, where various components are situated remotely from one another, but can be accessed by the processor 102.

The software 110 defines functionality performed by the reputation 100, in accordance with the present invention. The software 110 in the memory 106 may include one or more separate programs, each of which contains an ordered listing of executable instructions for implementing logical functions of the reputation server 100, as described below. The memory 106 may contain an operating system (O/S) 170. The operating system 170 essentially controls the execution of programs within the reputation server 100 and provides scheduling, input-output control, file and data management, memory management, and communication control and related services.

The I/O devices 174 may include input devices, for example but not limited to, a keyboard, mouse, scanner, microphone, etc. Furthermore, the I/O devices 174 may also include output devices, for example but not limited to, a printer, display, etc. Finally, the I/O devices 174 may further include devices that communicate via both inputs and outputs, for instance but not limited to, a modulator/demodulator (modem; for accessing another device, system, or network), a radio frequency (RF) or other transceiver, a telephonic interface, a bridge, a router, or other device.

When the reputation server 100 is in operation, the processor 102 is configured to execute the software 110 stored within the memory 106, to communicate data to and from the memory 106, and to generally control operations of the reputation server 100 pursuant to the software 110.

When the functionality of the reputation server 100 is in operation, the processor 102 is configured to execute the software 110 stored within the memory 106, to communicate data to and from the memory 106, and to generally control operations of the reputation server 100 pursuant to the software 110. The operating system 170 is read by the processor 102, perhaps buffered within the processor 102, and then executed.

When functionality of the reputation server 100 is implemented in software 110, as defined by software modules within the memory 106, as will be described herein, it should be noted that instructions for implementing the reputation server 100 can be stored on any computer-readable medium for use by or in connection with any computer-related device, system, or method. Such a computer-readable medium may, in some embodiments, correspond to either or both the memory 106 or the storage device 104. In the context of this document, a computer-readable medium is an electronic, magnetic, optical, or other physical device or means that can contain or store a computer program for use by or in connection with a computer-related device, system, or method. Instructions for implementing the system can be embodied in any computer-readable medium for use by or in connection with the processor or other such instruction execution system, apparatus, or device. Although the processor 102 has been mentioned by way of example, such instruction execution system, apparatus, or device may, in some embodiments, be any computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the processor or other such instruction execution system, apparatus, or device.

Such a computer-readable medium can be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM, EEPROM, or Flash memory) (electronic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

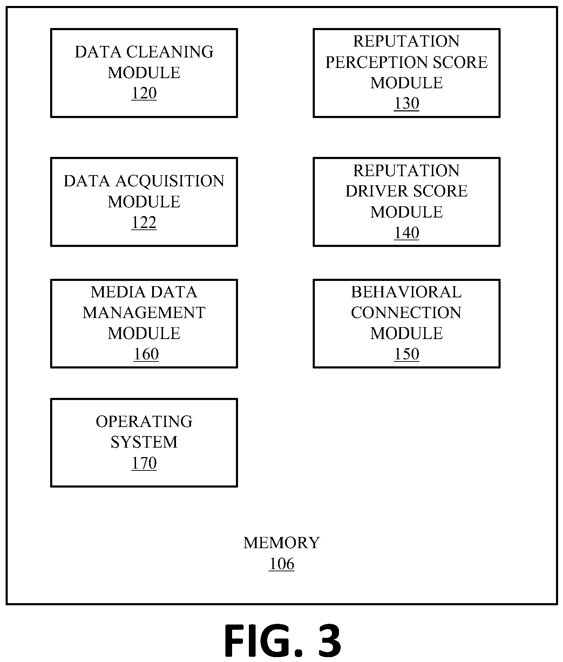

FIG. 3 is a schematic diagram further illustrating modules within the memory 106 of FIG. 2 that are used to perform functionality of the reputation server 100 in accordance with the present invention. As shown by FIG. 3, the reputation server 100 contains a data cleaning module 120, a reputation perception score module 130, a reputation driver score module 140, a behavioral connection module 150, and a media data management module 160. These modules work together to provide reputation determination and management as is to be described herein.

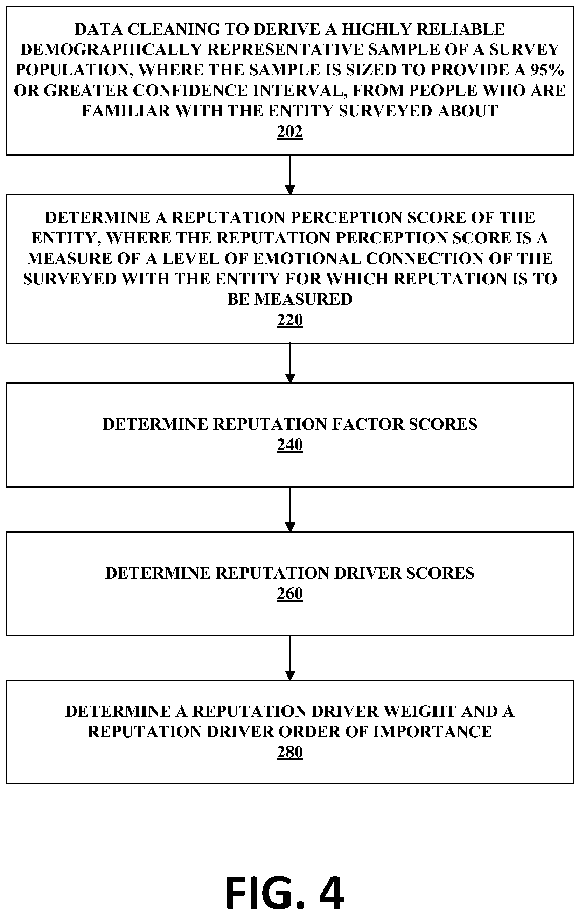

FIG. 4 is a flowchart exemplifying steps taken in accordance with the present system and method in determining and managing reputations of entities and industries. It should be noted that any process descriptions or blocks in flowcharts should be understood as representing modules, segments, portions of code, or steps that include one or more instructions for implementing specific logical functions in the process, and alternative implementations are included within the scope of the present invention in which functions may be executed out of order from that shown or discussed, including substantially concurrently or in reverse order, depending on the functionality involved, as would be understood by those reasonably skilled in the art of the present invention.

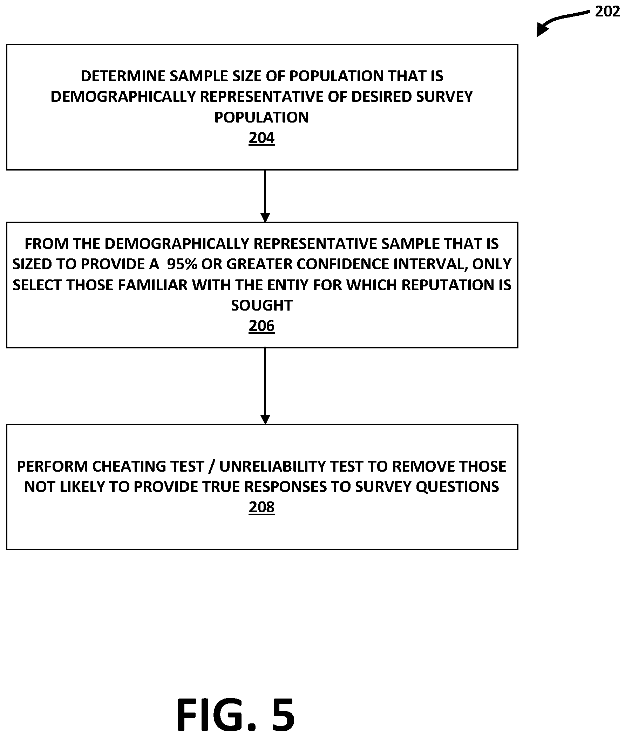

As shown by block 202, data is obtained for determining reputation of an entity and that data is cleaned. FIG. 5 is a flowchart further illustrating steps taken in obtaining the data and cleaning the data. Referring to FIG. 5, the present method begins with the gathering of survey data from an informed general public in a unique manner. Specifically, as shown by block 204 a sample size of individuals necessary for the survey is determined. The sample size of the population that is to be used is to be demographically representative of a desired size of the population for which the survey is sought. For example, if the population to be surveyed comprises forty percent males and sixty percent females, as well as twenty percent aged between fifteen and twenty-one, thirty percent aged between twenty-two and thirty-five, and fifty percent aged between thirty-six and fifty, the sample size for surveying would have the same or extremely close to these percentages so as to have a demographically representative sample group. The size, or number, of individuals surveyed is determined using a known statistical formula, resulting in obtaining a ninety-five percent or better confidence interval. This means that the difference between the survey results of the populations sought, and the survey results of the demographically representative smaller sized survey group is a maximum of around five percent. One having ordinary skill in the art would appreciate that a lower confidence interval may be used, however, it has been determined that a ninety-five percent or better confidence interval is ideal to provide the data beneficial to obtaining highly accurate reputation determination and management. The result of this step is a demographically representative sample that is sized to provide a ninety-five percent or better confidence interval.

As shown by block 206, a determination is then made to ensure that those to be surveyed have a predefined level of familiarity with the entity for which reputation determination is sought. Reputation determination is more accurate when only those with at least the predefined level of familiarity with the entity itself are surveyed. Only respondents that pass a pre-defined threshold of familiarity are considered in the rating. For example, familiarity can be assessed on a scale of one to seven, and only those familiar at level of four and up are considered. From the familiarity score, the present system and method can also provide the entity with an awareness score for their reference and reputation management. The level of familiarity of those to be surveyed may be determined by asking questions that are specific to the entity for which the reputation determination is sought.

Since a surveyed person could potentially lie about their level of familiarity with an entity, a screening for unreliability test, is performed to flush out those likely to lie or exaggerate about their familiarity with an entity associated with the survey questions (block 208). For example, a questionnaire can be sent that lists corporations that do not exist and requesting a familiarity level from the receiver of the survey. If the individual surveyed claims to be familiar with one or more corporation that does not exist, the responder may be considered to be unreliable and they would then be removed from the demographically representative sample that is sized to provide a ninety-five or greater confidence interval.

The previously mentioned data cleaning steps of FIG. 5 result in a highly reliable demographically representative sample of a survey population that is sized to provide a ninety-five percent or greater confidence interval, from people who are familiar with the surveyed entity. It should be noted that while the present description is provided with regard to determining a highly accurate reputation of an entity, this process that is being described herein may instead by applied for a specific product, brand, or even an industry.

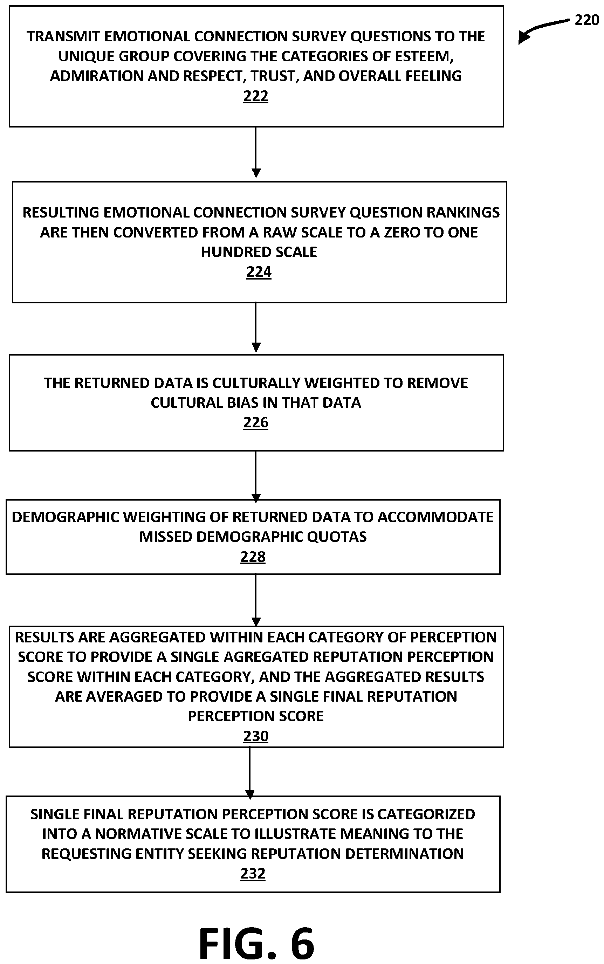

Returning to FIG. 4, after performing the data cleaning step (block 202), the reputation server 100 determines a reputation perception score (block 220). The reputation perception score is a measure of a level of emotional connection of a stakeholder, such as the general public, to be surveyed with the entity for which reputation is to be measured. FIG. 6 is a flowchart further illustrating steps taken in obtaining a reputation perception score.

Referring to FIG. 6, a series of focused, emotional connection survey questions are transmitted to the unique group resulting from the sample determination in the data cleaning step (hereafter, referred to as the "unique group"). The transmitted survey questions measure a level of emotional connection of the unique group with the entity for which reputation is being measured (block 222). It is to be recalled that the unique group is the result of the data cleaning step, so that emotional connection survey answers from the unique group are extremely similar to what would be returned by an entire desired population. More specifically, if a unique group is two thousand individuals, survey results from that unique group would be extremely similar, if not the same as that which would have been received if an entire population of one million people for which the survey was intended, were in fact surveyed.

In accordance with the present invention, the emotional connection survey questions transmitted fall into one of four categories. A first category of survey questions is esteem questions, which are questions intended to determine a level of esteem that the party surveyed associates with the entity to which a reputation measurement is desired. As an example, the survey question may ask a surveyed individual to rate from one to seven whether a company is a company that the surveyed individual gets a good feeling about, with a seven rating representing that a very good feeling is felt by the surveyed individual, and a one ratings representing that a very poor feeling is felt by the surveyed individual.

A second category of survey questions is admiration questions, which are questions intended to determine a level of admiration that the party surveyed associates with the entity to which a reputation measurement is desired. As an example, the survey question may ask a surveyed individual to rate from one to seven whether a company is a company that the surveyed individual admires and respects, with a seven rating being a high level of admiration and respect, and a one rating being a lowest level of admiration and respect.

A third category of survey questions is trust questions, which are questions intended to determine a level of trust that the party surveyed associates with the entity to which a reputation measurement is desired. As an example, the survey question may ask a surveyed individual to rate from one to seven whether a company is a company that the surveyed individual trusts, with a seven rating being a high level of trust, and a one being the lowest level of trust.

A fourth category of survey questions is feeling questions, which are questions intended to determine a level of positive feeling that the party surveyed associates with the entity to which a reputation measurement is desired. As an example, the survey question may ask a surveyed individual to rate from one to seven whether a company is a company that the surveyed individual feels has a good overall reputation, with a seven rating signifying a belief that the company has a very good overall reputation, and a one rating signifying a belief that the company has a very poor overall reputation.

While it is preferred that rating for each category of emotional connection survey be between one and seven, one having ordinary skill in the art would appreciate that a different scale may be used that is smaller than a zero to one-hundred scale. This will be apparent in the following description since a conversion is performed to change from a smaller scale to a zero to one-hundred scale, as described herein.

The result of this step is X number of returned first, second, third, and fourth category survey questions, where X is the number of individuals within the unique group. Therefore, if there are, for example, two-thousand individuals within the unique group (the highly reliable demographically representative sample of a survey population that is sized to provide a ninety-five percent or greater confidence interval, from people who are familiar with the surveyed entity), then assuming that all who received the emotional connection survey questions responded with ratings, there will be two-thousand first category question ratings, two-thousand second category question ratings, two-thousand third category question ratings, and two-thousand fourth category question ratings, also referred to herein as the resulting emotional connection survey question ratings. The resulting emotional connection survey question ratings may be stored within the reputation server 100 storage device 104, or within one of the other databases 30a, 30b, 30c within the network 1.

As shown by block 224, each of the resulting emotional connection survey question ratings returned are then converted by the reputation engine 108 from a raw scale of one to seven, to a zero to one hundred scale, to provide a rescaled score for each of the resulting emotional connection survey question ratings returned. This process may be performed by the reputation perception score module 130 using an equation such as, but not limited to the following equation 1.

$$\text{Rescaled Score} = ((\text{Raw Score-1}) / 6) \times 100 \qquad (\text{Eq. 1})$$

The result of this step is X number of esteem reputation perception scores, X number of admiration reputation perception scores, X number of trust reputation perception scores, and X number of feeling reputation perception scores, where X is the number of individuals within the unique group. Each of the reputation perception scores may then be stored within the reputation server 100 storage device 104, or within one of the other databases 30a, 30b, 30c within the network 1.

It has been determined that people in different countries, or geographical regions in general, tend to rate companies higher or lower resulting in an artificial skew in the rating distribution. As a result, and to ensure high accuracy in the final determined reputation of the reputation server 100, the present system and method overcomes this "cultural bias" in the data by standardizing all scores, per respondent, against the aggregate distribution of all scores stored (block 226). A standardization formula is applied in each market to ensure that scores are comparable across different markets, where different weights are applied to specific data based on the specific market. It should be noted that a "market" may be considered a specific geographical region, for example, a country, or a bigger or smaller geographical region. As an example, in Italy, the car brand Ferrari is likely to have an artificially high skew because the car is made in Italy. This would make survey results from those in Italy skewed on the high side. Therefore, the present system and method applies a standardization formula that takes into account a global mean and a global standard deviation across markets, and a country mean and a country standard deviation to normalize that which may have been skewed merely as a product of cultural pride or bias in general. As a result, a lower weight would be applied in Italy for the brand Ferrari than in other markets. Another example where a cultural weighting may be applied is when markets with a tendency to skepticism resulting in general lower opinions about corporations are compared with markets with an optimism tendency resulting in elevated opinions about corporations. In such cases, the cultural weighting removes cultural biases in rating and assures a standardized representation of reputation perceptions across different markets. The standardized formula may include equations 2 and 3 herein.

$$ZScore = \frac{(Rescaled\ Score - Country\ Mean)}{Country\ Standard\ Deviation} \qquad (Eq.\ 2)$$

$$Standardized\ Score = (ZScore * Global\ Std.\ Dev.) + Global\ Mean \qquad (Eq.\ 3)$$

In equation 2 the country mean is the unweighted average score in the region. Preferably, the country mean is calculated periodically (e.g. every three years) from historical data of raw scores on the respondent level in each country. In addition, the country standard deviation represents the variability of scores among the respondents. Preferably, the country standard deviation is calculated periodically (e.g. every three years) from historical data of raw scores on the respondent level in each country. Preferably, the country mean and country standard deviation should be recalculated for a market, or region, within a predefined time period, for example, but not limited to, every three years, as previously mentioned, although it need not be every three years. This will ensure a high level of accuracy in the determined reputation score of the present system and method.

One having ordinary skill in the art would appreciate that while an example of a "market" has been provided as being a geographical region, a different measurable grouping may be used and the present invention is not intended to be limited to markets only being geographical regions.

During data collection from the unique group it is also beneficial to hit demographically representative quotas. As an example, common demographic groups that are targeted to ensure a market demographic representative sample for surveying may include age and gender. Unfortunately, during data collection it is not always possible to hit target demographic quotas exactly. As an example, a target demographic quota may be sixty percent women and forty percent men, however, a resulting highly reliable demographically representative sample of a survey population that is sized to provide a ninety-five percent or greater confidence interval, from people who are familiar with the surveyed entity (*i.e.*, unique group) may not comprise sixty percent women. In these cases, the reputation perception score module 130 applies a demographic weight to the data collected from the unique group, where the demographic weight is dependent upon the actual unique group itself, so as to ensure that the unique group results are representative of the population targeted (block 228). If the unique group is representative of the population targeted, then no demographic weight is applied.

In accordance with one exemplary embodiment of the invention, a Random Iterative Method (RIM) weighting algorithm may be used to demographically weigh, and therefore match, the returned sample of the unique group, which may have already been culturally weighted, to the demographics of the population to which the study is intended. The algorithm is repeatedly applied to the data until the demographic weight converges. It is noted that a RIM weighting method allows a more precise analysis than a proportional weighting approach, although either method may be used, as well as other weighting methods known to those having ordinary skill in the art.

In accordance with an alternative embodiment of the invention, it should be noted that other weighting of data may be performed to account for other biases, such as, but not limited to, a data sources weighing. This would be beneficial when it is known that a specific data source tends to have a more positively biased or negatively biased audience that is used for surveying. Data source weighting takes this into account and applies a weight based on the source so as to normalize results.

The results after the weighting steps (blocks 226 and 228) are X number of rescaled, from zero to one hundred, emotional connection survey question returned ratings that have been weighted for cultural bias and demographic bias, for each of the categories of esteem reputation perception scores, admiration reputation perception scores, trust reputation perception scores, and feeling reputation perception scores, where X is the number of individuals within the unique group. These results are then aggregated within each category to provide a single aggregated reputation perception score within each of the four categories and a single final reputation perception score is derived from averaging these four (4) scores (block 230). It should be noted that additional or fewer categories may be implemented.

The resulting single final reputation perception score is then categorized into a normative scale, preferably of five categories (block 232), although less or more categories may be used. It is found that the use of five categories is ideal. For example, the five categories may be weak reputation, poor reputation, average reputation, strong reputation, and excellent reputation. Specific ranges of values between the zero to one hundred range for the reputation perception score may be assigned to each of the five categories, for example based on quantiles of a normal distribution, so that the received reputation perception score for an associated entity may have deeper meaning.

The present system and method provide for a great level of granularity of data, in addition to providing the overall single final aggregated reputation perception score, the reputation perception scores within each of the four categories, and the categorization of the single final aggregated reputation perception score into a normative scale. Specifically, it is recalled that the X number of original emotional connection survey question ratings are saved, the X number of rescaled emotional connection survey question ratings are saved, the X number of rescaled emotional connection survey question ratings that have been weighted for cultural and demographic bias for each of the four categories have been saved, the single aggregated reputation perception score within each of the four categories have been saved, the resulting single final reputation perception score has been saved, and the normative scale associated with the single final aggregated reputation perception score has been saved. This level of granularity in the data is very beneficial to the entity for which reputation determination is desired.

Returning to FIG. 4, after the reputation perception score module 130 (FIG. 3) determines the reputation perception score, the reputation driver score module 140 (FIG. 3) determines reputation factor scores (block 240). While the reputation perception score is a measure of a level of emotional connection of the general public to be surveyed with the entity for which reputation is to be measured, the reputation factor score is a measure of what an individual practically thinks about the entity for which reputation is to be measured.

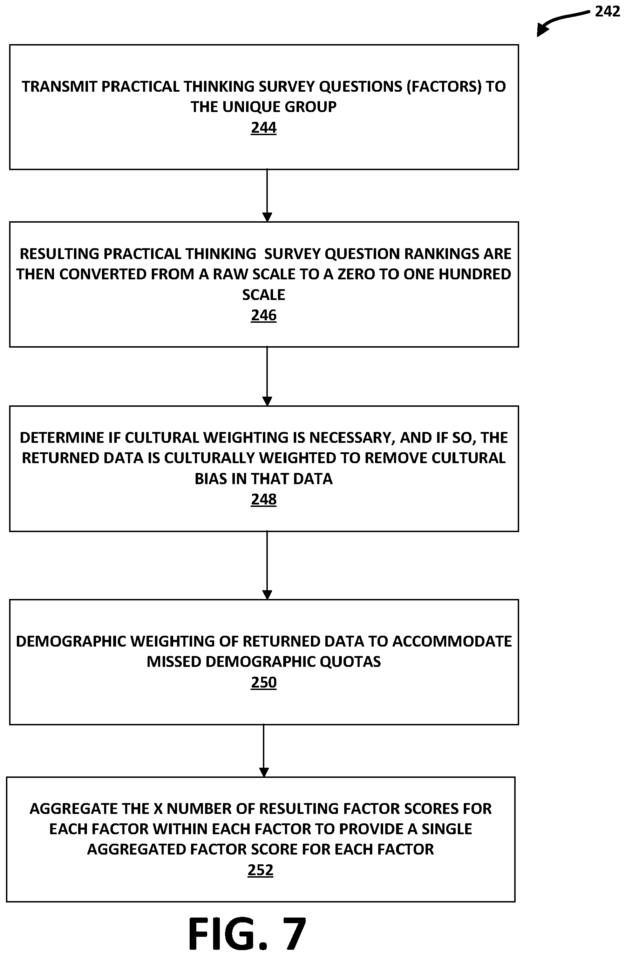

FIG. 7 is a flowchart 242 illustrating steps taken in deriving the reputation factor score associated with the entity for which reputation is to be measured. As shown by block 244, a second series of focused survey questions, this time being practical thinking survey questions, are transmitted to the unique group resulting from the data cleaning step. Each practical thinking survey question is also referred to as a factor. The transmitted practical thinking survey questions measure a level of practical thinking connection of the unique group with the company for which reputation is being measured. This may also be considered as the rational connection or the opinion of the respondent on each of the topics of the operations of the entity. It is to be recalled that the unique group is the result of the data cleaning step, so that practical thinking survey answers from the unique group are extremely similar to what would be returned by an entire desired population. More specifically, if a unique group is two thousand individuals, survey results from that unique group would be extremely similar, if not the same as that which would have been received if an entire population of one million people for which the survey was intended, were in fact surveyed.

Preferably there are more than twenty survey questions with the second set of focused survey questions. It is noted, however, that there may be more or fewer such survey questions within the set of practical thinking survey questions, depending upon a level of granularity needed to address aspects of drivers desired.

In accordance with the present invention, the second set practical thinking survey questions transmitted fall into one of seven categories. These categories are referred to herein as reputation drivers. Specifically, it was found that there are typically seven areas that people tend to care about when assessing the reputation of an entity. Those areas are referred to herein as reputation drivers, and include, for example, products and services, innovation, workplace, governance (also called conduct), citizenship, leadership, and performance.

The first reputation driver is Products & Services, which provides a perception of the general public on the quality and value of the entity's offerings and customer care. As an example, the survey question may ask a surveyed individual to rate from one to seven whether the entity offers high quality products and services, with a seven rating representing strong agreement, and a one rating representing strong disagreement felt by the surveyed individual.

The second reputation driver is Innovation, which addresses the perception of the company being innovative in its offerings, first to market and adaptable to change. As an example, the survey question may ask a surveyed individual to rate from one to seven whether the entity is an innovative company, with a seven rating representing strong agreement that the entity is an innovative company, and a one rating representing strong disagreement felt by the surveyed individual.

The third reputation driver is Workplace, which addresses the wellbeing of employees, Diversity, Equity and Inclusion, and workplace satisfaction. As an example, the survey question may ask a surveyed individual to rate from one to seven whether the entity offers equal opportunity in the workplace, with a seven rating representing strong agreement that the entity does offer equal opportunity in the workplace, and a one rating representing strong disagreement felt by the surveyed individual.

The fourth reputation driver is Governance (also called Conduct), which addresses ethics, transparency and corporate responsibility. As an example, the survey question may ask a surveyed individual to rate from one to seven whether the entity is fair in the way it does business, with a seven rating representing strong agreement that the entity is fair in the way it does business, and a one rating representing strong disagreement felt by the surveyed individual.

The fifth reputation driver is Citizenship, which addresses the company's contribution to making the world better by supporting good causes and contributing to the community. As an example, the survey question may ask a surveyed individual to rate from one to seven whether the entity supports good causes, with a seven rating representing strong agreement that the entity does support good causes, and a one rating representing strong disagreement felt by the surveyed individual.

The sixth reputation driver is Leadership, which represents perceptions on entity's leadership and clear direction. As an example, the survey question may ask a surveyed individual to rate from one to seven whether the entity has excellent managers, with a seven rating representing strong agreement that the entity does have excellent managers, and a one rating representing strong disagreement felt by the surveyed individual.

The seventh reputation driver is Performance, which addresses the financial performance of an entity and future growth prospects. As an example, the survey question may ask a surveyed individual to rate from one to seven whether the entity is a profitable company, with a seven rating representing strong agreement that the entity is a profitable company, and a one rating representing strong disagreement felt by the surveyed individual.

While it is preferred that the answered rating for each practical thinking survey question be between one and seven, one having ordinary skill in the art would appreciate that a different scale may be used that is smaller than a zero to one-hundred scale. This will be apparent in the following description since a conversion is performed to change from a smaller scale to a zero to one-hundred scale, as described herein.

The result of this step is X number of returned responses for each practical thinking survey question or factor, where X is the number of individuals within the unique group. Therefore, if there are two-thousand individuals within the unique group (the highly reliable demographically representative sample of a survey population that is sized to provide a ninety-five percent or greater confidence interval, from people who are familiar with the surveyed entity), then assuming that all who received the practical thinking survey questions responded with ratings, there will be two-thousand responses for each practical thinking survey question, also referred to herein as the resulting practical thinking survey question rating. The resulting practical thinking survey question ratings may be stored within the reputation server 100 storage device 104, or within one of the other databases 30a, 30b, 30c within the network 1.

As shown by block 246, each of the resulting practical thinking survey question ratings returned are then converted by the reputation engine 108 from a raw scale of one to seven, to a zero to one hundred scale, to provide a rescaled score for each of the resulting practical thinking survey question rating returned. This process may be performed by using an equation such as, but not limited to, the previously mentioned equation 1.

The result of this step is X number of factor scores for each practical thinking survey question, where X is the number of individuals within the unique group. Each of the factor scores may then be stored within the reputation server 100 storage device 104, or within one of the other databases 30a, 30b, 30c within the network 1.

To ensure high accuracy in the final determined reputation of the reputation server 100, the present system and method overcomes "cultural bias" in the data by standardizing all factor scores against the aggregate distribution of all factor scores stored (block 248). A standardization formula is applied in each market to ensure that factor scores are comparable across different markets, where different weights are applied to specific data based on the specific market. As previously mentioned, it should be noted that a "market" may be considered a specific geographical region, for example, a country, or a smaller geographical region. The standardization formula takes into account a country mean and a country standard deviation to normalize that which may have been skewed merely as a product of cultural pride or bias in general. The standardized formula may include the previously mentioned equations 2 and 3. Preferably, the country mean and country standard deviation should be recalculated for a market, or region, within a predefined time period, for example, but not limited to, every three years. This will ensure a high level of accuracy in the determined factor score of the present system and method.

As previously mentioned, during data collection from the unique group it is also beneficial to hit demographically representative quotas. As an example, common demographic groups that are targeted to ensure a market demographic representative sample for surveying may include age and gender. Unfortunately, during data collection it is not always possible to hit target demographic quotas exactly. As an example, a target demographic quota may be sixty percent women and forty percent men, however, a resulting highly reliable demographically representative sample of a survey population that is sized to provide a ninety-five percent or greater confidence interval, from people who are familiar with the surveyed entity (*i.e.*, unique group) may not comprise sixty percent women. In these cases, the reputation driver score module 140 applies a demographic weight to the data collected from the unique group, where the demographic weight is dependent upon the actual unique group itself, so as to ensure that the unique group results are representative of the population targeted (block 250). If the unique group is representative of the population targeted, then no demographic weight is applied.

Also as previously mentioned, in accordance with one exemplary embodiment of the invention, a RIM weighting algorithm may be used to demographically weigh, and therefore match, the returned sample of the unique group, which may have already been culturally weighted, to the demographics of the population to which the study is intended. The algorithm is repeatedly applied to the data until the demographic weight converges. It is noted that a RIM weighting method allows a more precise analysis than a proportional weighting approach, although either method may be used, as well as other weighting methods known to those having ordinary skill in the art.

In accordance with an alternative embodiment of the invention, it should be noted that other weighting of data may be performed to account for other biases, such as, but not limited to, a data sources weighing. This would be beneficial when it is known that a specific data source tends to have a more positively biased or negatively biased audience that is used for surveying. Data source weighting takes this into account and applies a weight based on the source so as to normalize results.

The results after the weighting steps (blocks 248 and 250) are X number of rescaled, from zero to one hundred, practical thinking survey question returned ratings that have been weighted for cultural bias and demographic bias, for each of the factors, where X is the number of individuals within the unique group. These results are also referred to herein as weighted factor scores. The X number of resulting weighted factor scores for each factor are then aggregated within each factor to provide a single aggregated factor score for each factor (block 252). The result is one resulting reputation factor score for each factor.

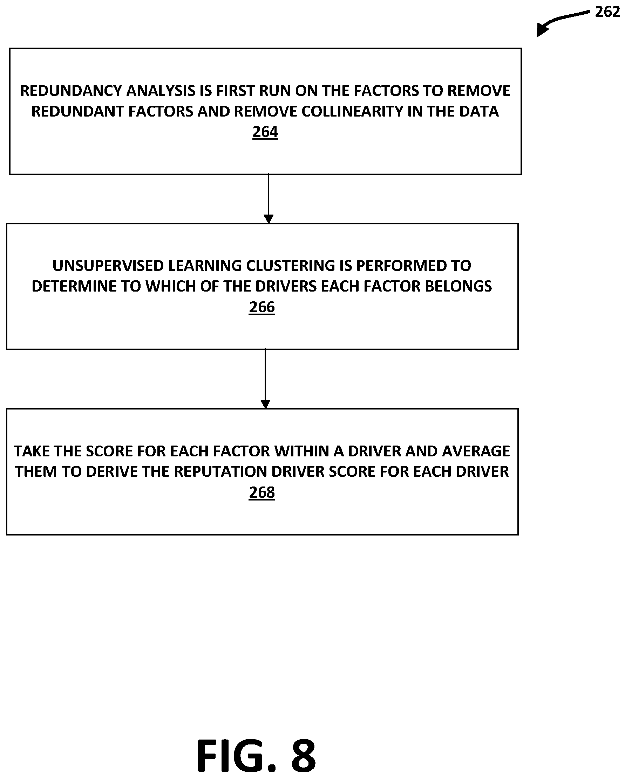

Returning to FIG. 4, after determining the resulting reputation factor scores the reputation driver score module 140 (FIG. 3) determines reputation driver scores (block 260). FIG. 8 is a flowchart 262 illustrating steps taken in determining reputation driver scores.

Referring to FIG. 8, as shown by block 264, redundancy analysis is first run on the resulting reputation factor scores to remove redundant factors and remove collinearity in the data. Specifically, it may be the case that in answering the practical thinking survey questions, surveyed parties may consider two or more of the practical thinking survey questions to be the same. As one having ordinary skill in the art would appreciate, this could skew resulting data, and therefore, make the resulting derived reputation and guidance regarding reputation of the entity less accurate. It is also noted that it may simply be desirable to decrease the number of survey questions asked. Knowing that there is redundancy in projected response would allow for removal of one or more questions. Therefore, such redundant factors should be removed, as well as associated collinearity in the data. To do so, the redundancy analysis (RDA) is run on the factor scores. As part of this process the factors are projected onto linearly independent unique components. This may result in less factors than originally used. A redundancy analysis may be considered as an extension of the multiple linear regression method (MLR) that accounts for multiple response / multiple explanatory input variables and is considered a common method in multivariate statistics. RDA may be performed, for example, by a dimensionality reduction method such as correspondence analysis (CA), discriminant analysis (DA), a canonical version of the principal component analysis (PCA), or non-metric multidimensional scaling (NMDS). Since one having ordinary skill in the art would know how to perform redundancy analysis (RDA), further description is not provided herein.

Unsupervised learning clustering is then used by the reputation driver score module 140 (FIG. 3) to determine to which of the drivers each factor belongs, thereby dividing each of the remaining factors after the redundancy analysis step into one of the drivers (block 266). The process of clustering the reputation factors with unsupervised machine learning into the reputation drivers may be performed by using, for example, principal component analysis (PCA), where the number of components is the number of drivers (7) and the result is the number of factors per each of the drivers (7). PCA is just an example of an unsupervised learning clustering method that may be used in such an implementation, but not limited to, and other clustering methods such as hierarchical clustering, K-Means, or other, may also be used. The result of the unsupervised learning clustering is the number of remaining factors broken into each one of the drivers, therefore, each driver will have a series of factors assigned thereto. For example, if there were twenty factors and seven drivers, the twenty factors are broken into the seven drivers so that each factor is uniquely assigned to a driver, resulting in, for example, a first driver having three factors, a second driver having two factors, a third driver having four factors, and so on.

To determine reputation driver scores the reputation driver score module 140 (FIG. 3) takes the scores of factors assigned to a single driver and averages them to result in a reputation driver score for that driver (block 268). As an example, if a first driver contains factors two, five, and seven, and the factor two score is seventy, the factor five score is eighty, and the factor seven score is ninety, the first reputation driver score is eighty. This process is repeated for all drivers to derive reputation driver scores. The clustering of the factors into drivers may be applied periodically, for example but not limited to once a year, to determine the optimal number of factors per each of the seven drivers. The resulting model structure of the reputation drivers, with certain factors assigned to each of the seven drivers, may be saved and used for calculation of driver scores from factor scores in the interim shorter time periods, for example monthly, or weekly.

As a result of this step, the reputation server 100 now contains the previously determined reputation score, the multiple resulting factor scores, and the reputation driver scores. Returning to FIG. 4, a relationship is sought between these three main bodies of data so as to determine a driver weight and a driver order of importance which will be beneficial to the entity seeking the reputation score (block 280). Specifically, an entity seeking a determination of their reputation is seeking to be able to manage their reputation and have as high a reputation as possible. The present system and method determines weights for each of the reputation drivers and order of importance to maximizing reputation of the entity.

To determine the driver weights, the driver score module 140 uses a supervised machine learning regression module, such as, but not limited to, linear regression, multivariate linear regression, random forest, or gradient boosting, to predict or inference the reputation score from the driver scores, where for the dependent variable, which is the variable we are seeking to predict, the reputation score is used, and for the input variable the driver scores are used. The result is the weight for each of the drivers, which allows for determining importance based on values of the weights. Specifically, a lower determined weight for a driver demonstrates that the specific driver is less important to the overall reputation of the entity. This allows the entity to determine which drivers are most important to increasing reputation of the entity. For ease of use, the resulting driver weights may be normalized so that each weight is a specific percentage of a total of one hundred. For example, out of seven weights, a first weight may be five percent, a second weight twenty percent, a third weight ten percent, a fourth weight thirty percent, a fifth weight five percent, and sixth weight eight percent, and a seventh weight twenty two percent. This would demonstrate that the fourth weight is the most important to the overall reputation of the entity, and therefore, the most value would be gained by the entity with investing time and effort into the fourth weight.

A similar weighting process as described above may be performed for weighting the reputation factors within each driver to derive for the entity a more granular level of insights on their reputation management.

A resulting report for an entity seeking its determined reputation and seeking to manage its reputation could include, per period of time, its overall reputation score and a list of the drivers and associated importance weights so as to provide guidance on which areas to invest additional time and money for maximum increase in reputation. Additional data may also be provided, such as, but not limited to, the factors scores and weights, benchmarking to competitors, industry classification, benchmarking to industry, touch-points between the stakeholder and the entity, media data and scores, ESG (environmental, social, and governance) perception scores, and various business outcomes scores (also referred to herein as behavioral connection scores). This data and the trend lines, benchmarking analysis, machine learning results, and reputation management insight and guidance related to reputation management may be delivered to the entity via a digital platform, via one or more means, such as, but not limited to, Power point, excel files, and one or more of many other means.

The memory 106 also contains a behavioral connection module 150. The behavioral connection module 150 is used to determine behavioral connection scores. Behavioral connection scores are a measure of the likelihood that the targeted population will perform a positive action on behalf of an entity.

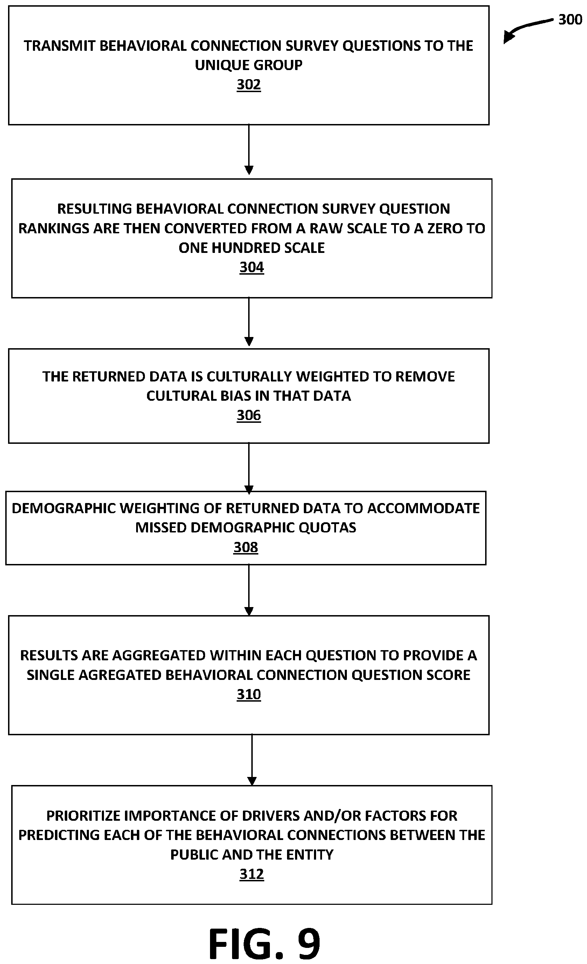

FIG. 9 is a flowchart 300 illustrating steps taken in deriving the behavioral connection score associated with the entity for which reputation is to be measured. As shown by block 302, a third series of focused survey questions, this time being behavioral connection survey questions, are transmitted to the unique group resulting from the data cleaning step. One having ordinary skill in the art would appreciate that transmitting the survey questions may be performed by one or more of many different techniques, such as, but not limited to, having the respondent log into a website, sending materials to review and response, or any other way that a survey may be provided. Of course, as previously mentioned, there may be unique groups for each targeted population group. As non-limiting examples, there may be a general public in the United States unique group, a pet-owners in Europe unique group, and an IT decision makers unique group. In addition, when all of the scores related to reputation management such as reputation scores, factor scores, driver scores, behavioral connection scores, and all other reputation management scores are updated, the members of the unique group may vary from those surveyed in the previous period. Further, each time the set of scores are calculated, the scores are saved to the database in association with a time period, per entity, so as to allow for determining trends, building machine learning models, and to help the entity manage their reputation over time.

The transmitted behavioral connection survey questions measure the likelihood that a member of the unique group will perform a positive action on behalf of the entity for which reputation is being measured. This may also be considered as the Business Outcomes of Reputation Management. Non-limiting examples of survey questions focused on determining a measure of the likelihood that the public will perform a positive action on behalf of an entity include questions asking how likely is it that the surveyed individual would recommend the entity, how likely it is that the surveyed individual would work for the entity, how likely it is that the surveyed individual would buy from the entity, how likely it is that the surveyed individual would invest in the entity, and more.

It is to be recalled that the unique group is the result of the data cleaning step, so that behavioral connection survey answers from the unique group are extremely similar (within a 95% confidence interval) to what would be returned by an entire desired population. More specifically, if for example a unique group is two thousand individuals, survey results from that unique group would be extremely similar (within 95% confidence interval), if not the same (with only a 5% margin of error) as that which would have been received if an entire population of more than one million people for which the survey was intended, were in fact surveyed.

While a specific number of behavioral connection survey questions is not required, it is preferred that there be about ten of such behavioral connection questions, each representing a particular desired business outcome, for example, 11 survey questions within the third set of focused survey questions. It is noted, however, that there may be more or fewer such survey questions within the set of behavioral connection survey questions, depending upon a level of granularity needed.

It is preferred that the answered ratings for each behavioral connection survey question be between one and seven, although one having ordinary skill in the art would appreciate that a different scale may be used that is smaller than a zero to one-hundred scale. This will be apparent in the following description since a conversion is performed to change from a smaller scale to a zero to one-hundred scale, as described herein.

The result of this step is X number of returned responses for each behavioral connection survey question or factor, where X is the number of individuals within the unique group. Therefore, if there are two-thousand individuals within the unique group (the highly reliable demographically representative sample of a survey population that is sized to provide a ninety-five percent or greater confidence interval, from people who are familiar with the surveyed entity), then assuming that all who received the behavioral connection survey questions responded with ratings, there will be two-thousand responses for each behavioral connection survey question, also referred to herein as the resulting behavioral connection survey question ratings. The resulting behavioral connection survey question ratings may be stored within the reputation server 100 storage device 104, or within one of the other databases 30a, 30b, 30c within the network 1.

As shown by block 304, each of the resulting behavioral connection survey question ratings returned are then converted by the reputation engine 108 from a raw scale of one to seven, to a zero to one hundred scale, to provide a rescaled score for each resulting behavioral connection survey question rating returned. This process may be performed by using an equation such as, but not limited to, the previously mentioned equation 1.

The result of this step is X number of behavioral connection scores for each behavioral connection survey question, where X is the number of individuals within the unique group. Each of the behavioral connection scores may then be stored within the reputation server 100 storage device 104, or within one of the other databases 30a, 30b, 30c within the network 1.

To ensure high accuracy in the final determined reputation of the reputation server 100, the present system and method overcomes "cultural bias" in the data by standardizing all behavioral connection scores against the aggregate distribution of all behavioral connection scores stored (block 306). A standardization formula is applied in each market to ensure that behavioral connection scores are comparable across different markets, where different weights are applied to specific data based on the specific market. As previously mentioned, it should be noted that a "market" may be considered a specific geographical region, for example, a country, or a smaller geographical region. The standardization formula takes into account a country mean and a country standard deviation to normalize that which may have been skewed merely as a product of cultural pride or bias in general. The standardized formula may include the previously mentioned equations 2 and 3.

Preferably, the country mean and country standard deviation should be recalculated for a market, or region, within a predefined time period, for example, but not limited to, every three years. This will ensure a high level of accuracy in the determined behavioral connection score of the present system and method.

As previously mentioned, during data collection from the unique group it is also beneficial to hit demographically representative quotas. As an example, common demographic groups that are targeted to ensure a market demographic representative sample for surveying may include age and gender. Unfortunately, during data collection it is not always possible to hit target demographic quotas exactly. As an example, a target demographic quota may be sixty percent women and forty percent men, however, a resulting highly reliable demographically representative sample of a survey population that is sized to provide a ninety-five percent or greater confidence interval, from people who are familiar with the surveyed entity (*i.e.*, unique group) may not comprise sixty percent women. In these cases, the behavioral connection score module 150 applies a demographic weight to the data collected from the unique group, where the demographic weight is dependent upon the actual unique group itself, so as to ensure that the unique group results are representative of the population targeted (block 308). If the unique group is representative of the population targeted, then no demographic weight is applied.

Also as previously mentioned, in accordance with one exemplary embodiment of the invention, a RIM weighting algorithm may be used to demographically weigh, and therefore match, the returned sample of the unique group, which may have already been culturally weighted, to the demographics of the population to which the study is intended. The algorithm is repeatedly applied to the data until the demographic weight converges. It is noted that a RIM weighting method allows a more precise analysis than a proportional weighting approach, although either method may be used, as well as other weighting methods known to those having ordinary skill in the art.

In accordance with an alternative embodiment of the invention, it should be noted that other weighting of data may be performed to account for other biases, such as, but not limited to, a data sources weighing. This would be beneficial when it is known that a specific data source tends to have a more positively biased or negatively biased audience that is used for surveying. Data source weighting takes this into account and applies a weight based on the source so as to normalize results.

The results after the weighting steps are X number of rescaled, from zero to one hundred, behavioral connection survey question returned ratings that have been weighted for cultural bias and demographic bias, for each of the questions, where X is the number of individuals within the unique group. These results are also referred to herein as weighted behavioral connection scores. The X number of resulting weighted behavioral connection scores for each question are then aggregated within each individual question to provide a single aggregated behavioral connection score for each behavioral connection survey question (block 310). The result is one resulting behavioral connection score for each behavioral connection survey question. For example, if there are ten (10) behavioral connection survey questions, the result after the previously mentioned steps is one aggregate resulting behavioral connection score for each of the ten behavioral connection survey questions.

A resulting report for an entity seeking its determined reputation and seeking to manage its reputation could include, per period of time, its aggregate resulting behavioral connection score so as to provide guidance on which areas to invest additional time and money for maximum increase in reputation.

At this point, resulting data includes reputation scores, driver scores per driver, factor scores per factor, and behavioral connection (also called business outcome) scores per behavioral connection question, as well as the overall reputation score and a list of the drivers and associated importance weights (prioritizing the importance of each driver for the entity's reputation). In accordance with the present invention, additional actionable insights may be presented to the entity seeking its reputation score. Specifically, for each behavioral connection score, the present system and method can prioritize the importance of drivers and/or factors for predicting or inferencing each of the behavioral connections between the public and the entity for which reputation is sought (block 312). This allows the entity to be better able to determine what things, as identified by drivers and factors, to focus on in order to increase behavioral connection between the public represented by the unique group and the entity.

Prioritization of the importance of drivers for predicting or inferencing each of the behavioral connections can be performed by using a supervised machined learning regression model, such as, but not limited to, linear regression, multivariate linear regression, random forest, or gradient boosting, to predict or inference a known behavioral connection score from the driver scores, where the known behavioral connection score may be one previously derived as already described, or one received remotely or stored within the reputation server 100 storage device 104, or within one of the other databases 30a, 30b, 30c within the network 1. As a non-limiting example, in using a linear regression or a random forest regression, the behavioral connection question may be "are you likely to purchase a product from the entity", and the scores, for instance from a two-thousand scores from a unique group of two-thousand individuals, may be the scores derived for this behavioral connection question after calculations and weightings. Another example of implementation would be using aggregated scores of reputation perception and drivers as inputs per each dependent set of behavioral connection aggregated scores, for example, 12 or 24 for each entity. Ideally, for increased accuracy and for detecting evolution of weights over time, the regression model is used tens or even hundreds of times, to derive an unknown weight, or hyperparameter, for each driver. Based on the weight derived for each driver, or a perception score, all perception scores (including reputation score, reputation drivers scores, ESG scores, brand scores, etc.) that are predictors of a single behavioral connection are prioritized by numerically sorting the perception drivers and other aggregated perception scores by weight value, with the largest perception score weight representing the perception score that has the greatest effect on the behavioral connection score (also called business outcome score). The prioritized perception scores weights may then be normalized to a zero to one-hundred percent range. An example of a result may be for a first behavioral connection question a first driver weight of forty percent, a second driver weight of ten percent, a third driver weight of fifteen percent, a fourth driver weight of twelve percent, and so on. This demonstrates that the first perception score, for example the score of the reputation driver 'Products and Services' has the greatest effect on improving the first behavioral connection score. The prioritization of the most important drivers and other perception scores for each of the business outcomes provide information to the entity (company or industry) on areas to invest in, and which activities to prioritize, to increase a certain business outcome, or to target a certain population of stakeholders.

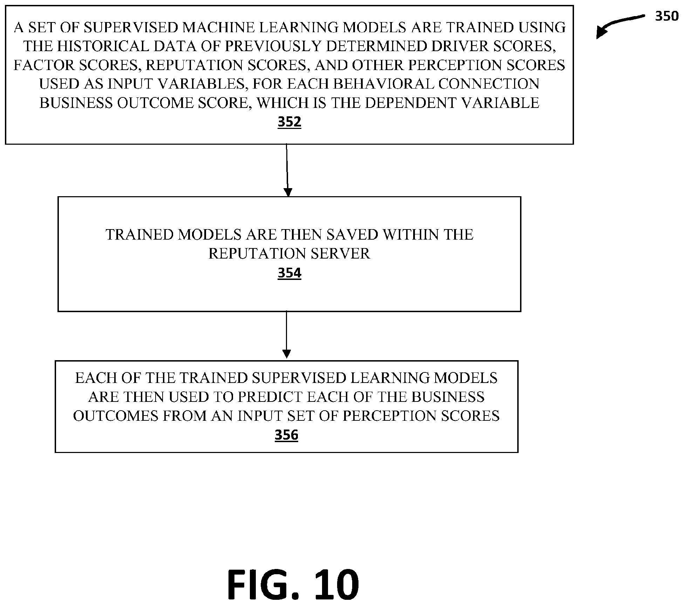

The process for prioritizing the importance of factors for predicting or inferencing each of the behavioral connections can be performed in the same manner as the process used for prioritizing the importance of perception drivers, as previously mentioned, with supplementing the factors for the drivers. The result of this process is having prioritized drivers and prioritized factors that are important to predicting a specific behavioral connection. In accordance with the present system and method, the behavioral connection module 150 can then use supervised machine learning classification models to predict each of the behavioral connection scores from historical data, namely, the combination of already derived scores, including the reputation scores, factor scores, and driver scores, and possibly additional scores such as perception ESG (environmental, social, governance) scores, brand scores, etc. FIG. 10 is a flowchart 350 further illustrating steps taken by the behavioral connection module 150 in predicting the behavioral connection scores from the combinations of scores. Referring to block 352, a set of supervised machine learning models are trained using the historical data of previously determined driver scores, factor scores, reputation scores, and other perception scores used as input variables, for each behavioral connection business outcome score, which is the dependent variable. The trained models are then saved within the reputation server 100 (block 354). Each of the trained supervised learning models are then used to predict each of the business outcomes from an input set of perception scores. The input perception scores may include reputation scores, driver scores, factor scores, and other perception scores, based on the set of perception scores the model was trained with (block 356).

In implementation, for example, block 352 works by training of a single supervised machine learning model for a single behavioral connection question first using as the input variables the reputation scores, factor scores, and driver scores, and as output dependent variable a single behavioral connection score for a responding unique group, with or without a time lag, for example of one month. This process may be performed for one entity or multiple entities for a set of unique groups. As a second step of block 352, this same process is then performed for the same set of entities and the same set of responding unique groups, using the same input variables, but using a second of the behavioral connection scores, which is associated with a second behavioral connection score provided by that set of unique groups for one or multiple entities. As a third step of block 352, this process is performed for a set of unique groups per one or multiple entities, until a supervised machine learning model is trained for each of the behavioral connection scores, resulting in a set of supervised machines learning trained models, per each of the behavioral connection business outcomes. When training a supervised machine learning model per one entity, for one behavioral connection business outcome, the model training may be performed tens or even hundreds of times to increase the accuracy of the model by tuning the hyperparameters. The first, second, and third steps are then repeated for a second entity, and so on, until it has been performed for all sets of respondent groups, per entity, resulting in Y sets of supervised machine learning trained models, each per entity. Therefore, if there are for example, one hundred entities, the result would be one hundred sets of supervised machine learning trained models, each per entity. When training a supervised machine learning model per unique group, or per a set of unique groups, for multiple entities, the first, second, and third steps are then repeated for a second unique group, and so on, until it has been performed for all unique groups, resulting in Z sets of supervised machine learning trained models, each per a unique group. Similarly, therefore, if there are, for example, ten sets of unique groups, the result would be ten sets of supervised machine learning trained models, each per a unique group. Another example of implementation may be training one machine learning model, per at least one behavioral connection business outcome, using at least one unique group and at least one entity. As previously mentioned each of these machine learning models may be trained with or without a time lag, where a time lag may be, as a nonlimiting example, of one month. The trained models are then saved within the reputation server 100 (block 354). The trained models are then may be used to predict each of the behavioral connections from an input set of perception scores to help entities manage their reputation and business outcomes.

A non-limiting example of block 352 in FIG. 10 may include the following. For purposes of the example, we can assume that the behavioral connection question is "how likely is it that you will purchase a product from this entity?" Of course, this is only an example and many other behavioral connection questions may be used. It is also assumed that the unique group contains two-thousand individuals per year, resulting in the behavioral connection question being presented each month to a subset of the two-thousand individuals, or respondents, per multiple entities, for example three. For exemplary purposes, we can assume that there are seven drivers and twenty factors. Therefore, for each subset of the unique group, there are seven driver scores, twenty factor scores, and one reputation score, all of which, and additional perception scores, may be used as the input variables for the supervised machine learning model being trained. As the output variable, the business outcome scores for one business outcome question is used and the model is trained. As the second step of block 352, this same process is then performed for the same first responding unique group, using the same seven driver scores, twenty factor scores, and one reputation score as input variables, but using the second of the behavioral connection scores, which is associated with the second behavioral connection score provided by that unique group. As previously mentioned, this process is performed for the first unique group until the supervised machine learning model is trained for each of the behavioral connection scores, resulting in a set of supervised machine learning trained models per each behavioral connection business outcome score, for example 10.

Training of the models results in obtaining the relationship between the input variables and the output variables, also referred to as hyperparameters, or weights. Since the relationship between the input variables and output variables is known through having determined the hyperparameters, the present system and method can predict behavioral connection business outcome scores from newly received input variables associated with a new respondents' group who has responded to survey questions necessary to provide the seven driver scores, twenty factor scores, and one reputation score. Again, this is possible because the relationship between input variables and output variables is known, via the trained models, resulting in the hyperparameters, which can then be used when newly received input variables are provided, so as to predict resulting business outcome scores for the new respondent group associated with the newly received input variables, which are the scores calculated form all the respondents in the unique group in a time period, such as one month.

As a result of the abovementioned, after the supervised machine learning models are trained, the present system and method can predict business outcome scores for a new group of respondents as resulting from the input variables of the new respondents' group, including the driver scores, factor scores, and reputation score. This, in turn, decreases the number of survey questions that would need to be presented to a respondent, which decreases investment cost associated with surveys such as, but not limited to, fielding surveys focused on business outcomes, processing responses to the fielding, time associated with the fielding and processing, and more. As these machine learning models may be trained with a time lag, for example of one month, the behavioral connection business outcomes expected in a future time, for example next month, may be predicted from the input variables of reputation, drivers and factors, preparing the entity for expected stakeholder behaviors in the near future. The predicted behavioral connection value may be, but is not limited to, a score, a confidence interval, a range of scores, a quantile to which the score may belong, a bucket on a normative scale (for example, poor, weak, average, strong, or excellent), if the score is expected to be in the top 75% or below, or simply if the score is expected to go up or down next month as compared to the previous month.

At this point, resulting data includes, among other things, reputation scores and behavioral connection scores per business outcome (for example for 10 business outcomes), as well as the overall reputation score overtime trend and behavioral connections over time trends per each of the behavioral connection scores. With this information, correlations may be derived between the set of reputation scores over a period of time, for example 12 monthly scores, and each of the behavioral connection scores for the same period of time (for example, 12 monthly scores). In accordance with the present invention, additional actionable insights may be presented to the entity seeking its reputation score. Specifically, for each behavioral connection score, the present system and method can calculate the correlation, for example one may use the Pearson correlation, or Spearman correlation, between each of the behavioral connections set of scores over a period of time (for example 12 months) and between the reputation of the entity for which reputation is sought (block 312) over this period of 12 months. Calculating the correlation between the set of reputation scores over a period of time (for example 12 months) that were collected for a particular entity from a set of unique groups (for example 12) and a set of scores of a particular behavioral connection over the same period of time and the same set of unique groups would involve for example calculating the $R^2$ value, where a value of $R^2$ above a defined threshold (for example 0.8) would indicate a high correlation. As statistical methods of calculating the correlation between two set of numbers, or two trends, are known to those having ordinary skill in the art, we will not describe here further how a correlation may be derived. For purposes of the example, we can assume that the behavioral connection question is "how likely is it that you will purchase a product from this entity?" Of course, this is only an example and many other behavioral connection questions may be used. This allows the entity to better understand the correlation between its reputation over a set period of time (for example 12 months) and each of the business outcomes this entity is seeking. Thus, further understanding and being able to manage the influence of the reputation of the entity and the behavioral connection between the public represented by a certain unique group, or a set of unique groups, and the entity.

The prior description has been provided for determining reputations through use of surveys. In addition to use of surveys, the present invention may instead determine reputation from media and additional sources of data. Unlike in use of surveys, when determining reputation from media, questions cannot easily be asked and answered. Examples of media that may be used for determining reputation in accordance with the present invention include, but are not limited to, electronic news feeds, blogs, social media, video media, and much more.

For calculating reputation scores and weights from media data (and additional enrichment data sources), the present system and method uses Natural Language Processing (NLP) methods of machine learning (ML) and artificial intelligence (AI). One having ordinary skill in the art would appreciate that other analytics and data science methods, such as audio to text transcription, information extraction methods, and classic methods of text analytics or text mining, may instead be used by the present system and method to translate media into searchable text and derive quantities and measurements. In other implementations of the present invention, one may also use image recognition, voice recognition or video analysis, and sentiment analysis from audio, images, and video may be deployed.

In the current invention various information extraction and entity extraction NLP methods may be used. As a non-limiting example, one may use Named Entity Recognition (NER) to extract entity names from unstructured text and Keyword in Context (KWIC) methods to create summarized or short text extract around the extracted entity name. While other methods, both for entity extraction and short text summaries around an entity name or a keyword may be used, the present description focuses on using these as an example of the implementation.

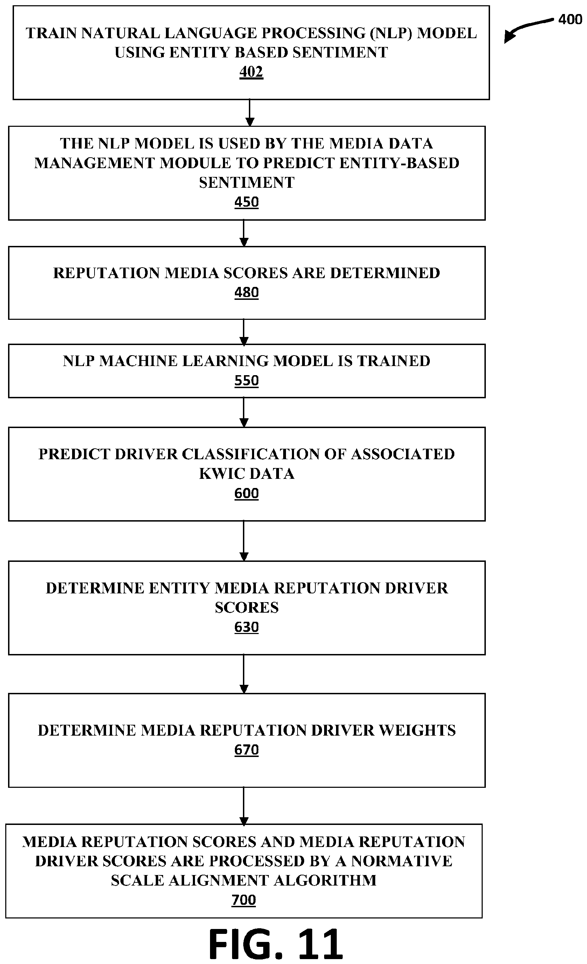

FIG. 11 is a flow chart 400 illustrating steps taken by the present media data management module 160 (FIG. 3) for purposes of determining reputation of an entity through use of at least one media source. As shown by block 402, an NLP model is trained using entity-based sentiment, resulting in an at least one trained NLP machine learning (ML) model and entity-based sentiment labeled keyword in context (KWIC) data that is then stored. Entity based sentiment of new KWIC data is then predicted (also called inferenced or inferred) using the NLP model (block 450). As shown by block 480, media reputation scores are then calculated and stored. It should be noted that the text analysis and text mining model that may be used does not have to be an NLP model, but may be a different text analysis and text mining model. In such situations of using a text analysis model and/or a text mining model, steps described herein, such as training, would not be necessary, as would be known to one having ordinary skill in in the art. As provided herein, a media reputation score is a measure of the emotional connection about an entity that is calculated using media data.

One having ordinary skill in the art would appreciate that an entity-based sentiment is an emotion or feeling about the entity portrayed in media. A non-limiting example of such an emotion demonstrated within a media data may be that entity X is a "great company", which would be a positive entity-based sentiment about entity X. Another non-limiting example of an emotion demonstrated within a media data may be that entity Y is "struggling to meet demands of its stakeholders", which would be a negative entity-based sentiment about entity Y. Usually entity-based sentiment is measured per an at least one media data point, where some non-limiting examples of media data points may be an article, a news post, a blog, a social media post, a video, a podcast, or any other piece of information posted or shared via the media.

Media reputation driver scores are then determined using the entity-based sentiment. To do so, an NLP machine learning model is trained, as shown by block 550, after which driver classification of associated KWIC data is predicted (also called inferenced or inferred), as shown by block 600. As shown by block 630, entity media reputation driver scores are then determined. Media reputation driver weights are then determined, as shown by block 670. As shown by block 700, the media reputation scores and the media reputation driver scores are processed by a normative scale alignment algorithm that normalizes and aligns the entity media reputation scores and the entity media reputation driver scores to a normative scale of poor, weak, average, strong, excellent. The normative scale above is just an example, and one having ordinary skill in the art would appreciate that other normative scales may be used as well.

The NLP model is trained using sentiment-labeled text extracts or segments surrounding a desired keyword (for example, an entity name). As a nonlimiting example, the text segments surrounding a keyword may be referred to as key word in context (KWIC), but other short text around a keyword or a summarized text with keywords may be considered similarly. The KWIC data is annotated with a sentiment label, for example of 1 for positive sentiment, -1 for negative sentiment, and 0 for a neutral sentiment, and stored. One having ordinary skill in the art would appreciate that other labeling of sentiment, using numbers or characters, may be used as well. The NLP model is then trained using the sentiment annotated KWIC data, and the trained model is then stored.

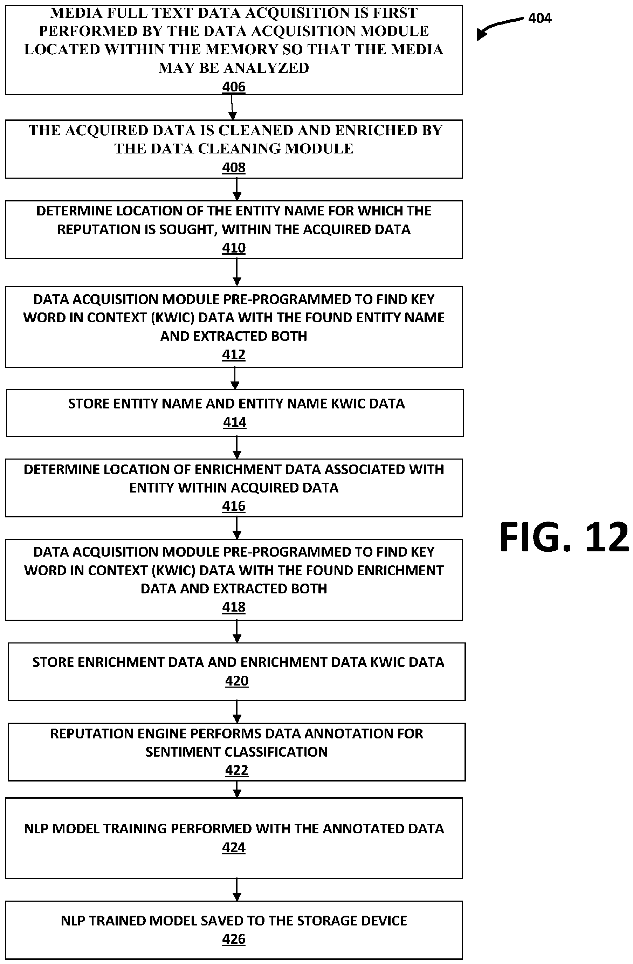

FIG. 12 is a flowchart 404 further illustrating the step of the NLP model being trained. It is important to train the NLP model prior to use so that the model may be used in predicting (also called inferencing or inferring) entity-based sentiment for determining media reputation scores. As shown by block 406, media full text data acquisition is first performed by the data acquisition module 122 (FIG. 3) located within the memory 106 (FIG. 3) so that the media may be analyzed. Categories of media can be broadcast media, such as, but not limited to, television, radio, live internet streaming video or audio, advertisements, transcribed broadcasts, and other internet media such as, but not limited to, websites, mainstream media and other news streams, blogs, PR releases, Twitter, Reddit, Facebook, Instagram, and other sources of social media, print media such as, but not limited to, newspapers and magazines, or another category of media. Text associated with the media is to be extracted for use in accordance with the present system and method. For example, voice recognition software may be used to audibly transcribe a YouTube video, or data acquisition software may be used to harvest data from an online blog, or website. The full text data acquisition may be performed by an API data-feed of a certain media source, or multiple media sources, by a web crawling and scraping software, or by a media data mining service. One having ordinary skill in the art would appreciate that other data acquisition systems may be used, as long as text from the media source can be extracted. As a non-limiting example, the text associated with a YouTube video being used as a media source, may be extracted from the video. In addition, text of a tweet, a blog, or text from a mainstream media source may be extracted using known techniques of text extraction. Usually, multiple media data points are extracted on a regular cadence or time-period, such as daily, weekly, monthly, or even at near-real time, or real time, to analyze the reputation of an entity for which reputation is sought from media data.

As shown by block 408, the acquired data is then cleaned and enriched by the data cleaning module 120 (FIG. 3). The manner of cleaning data for NLP model training is different than the data cleaning method previously used for survey results. For cleaning of the acquired media text data, different scripts may be used by the data cleaning module 120 (FIG. 3) to ensure that redundancies in gathered text is removed, spam is removed, corrupted characters are removed from the text, and malicious data is removed, to mention a few of the text data cleaning options. In addition, cleaning may involve determining if a use of the entity name is in the correct context, for example, if the entity name is Apple, making sure that data to be searched is not for the fruit apple.

Enrichment of the data is performed to increase robustness of data that will be made available through training of the model, for predicting entity-based sentiment, and for determining media reputation scores. Enrichment is performed by determining names of other parties that are related to the entity for which reputation is being sought so that those names may also be searched for within the acquired data. In addition, other names or acronyms for the entity may be searched such as a dba, and names of brands or products of the entity may be searched. For example, if corporation X is the entity for which reputation is sought, names of the president and CEO of corporation X may also be searched for within the acquired data, thereby making the acquired data more robust because this data is related to the entity for which reputation is sought. Enrichment data may also include trademarks of the entity, brand names of the entity, product names of the entity, and more, as long as the enrichment data is related to the entity for which reputation is sought.

Location of the entity name for which the reputation is sought, within the acquired data, is then determined, as shown by block 410. Specifically, the cleaned data is searched by the data acquisition module 122 to find location of the entity name for which reputation is sought.

The data acquisition module 122 (FIG. 3) is pre-programmed to find key word in context (KWIC) data with the found entity name, and extract the entity name and the KWIC data with the entity name, as shown by block 412. A predefined number of words prior and after the entity name are captured with the entity name to create the entity name KWIC data. As an example, the paragraph in which the entity name of interest is located may entirely be extracted as the KWIC data, along with the entity name. It is noted that the exact number of words prior and after the searched entity name may vary, and therefore, predefinition of the KWIC size is desired. The entity name KWIC data and entity name itself, is then stored within the storage device 104 (FIG. 2), as shown by block 414. In addition to storing the entity name and entity name KWIC data, the uniform resource locator (URL) address of the entity name KWIC may be stored and a title of an article, tweet, video, audio file, or other media data source, associated with the entity name and KWIC data.

Location of the enrichment data associated with the entity for which the reputation is sought, within the acquired data, is then determined, as shown by block 416. Specifically, the enrichment data is searched by the data acquisition module 122 to find location and content of the enrichment data.

The data acquisition module 122 (FIG. 3) is pre-programmed to find KWIC data with the found enrichment data, and extract the enrichment data KWIC data with the enrichment data, as shown by block 418. The enrichment data KWIC data and enrichment data itself, is then stored within the storage device 102 (FIG. 2), as shown by block 420. In addition to storing the enrichment data and enrichment data KWIC data, the URL address of the enrichment data KWIC data may be stored and a title of an article, video, audio file, or other media data source, associated with the enrichment data KWIC data.

The saved KWIC data, inclusive of the entity name KWIC data and the saved enrichment data KWIC data, is what is used by the reputation engine 108 (FIG. 2) to perform NLP model training, predicting (which may also be called inferencing or inferring) entity-based sentiment with the NLP model, and determining reputation of the searched entity through use of media data, as is described in detail herein.

The first eight steps of NLP model training may be performed daily, weekly, monthly, quarterly, or on another cycle so as to ensure that the KWIC data, inclusive of the entity KWIC data and the enrichment data KWIC data, is current.

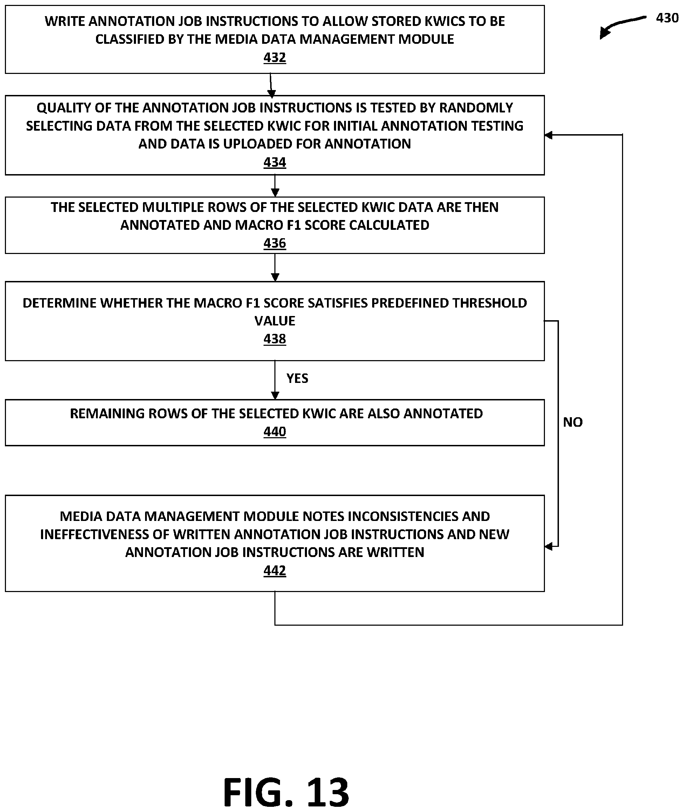

As shown by block 422, the reputation engine 108 (FIG. 3) then performs data annotation for sentiment classification to positive, negative, or neutral. Other more detailed classification may be used, for example very negative, negative, positive, very positive, neutral, etc. For simplicity we will use here as a nonlimiting example sentiment classification to positive/negative/neutral. Usually, numerical labels of 1, -1, and 0 are assigned to represent positive, negative, and neutral, respectively, but other labels, numerical or alphabetical, may be used. As is known by those having ordinary skill in the art, data annotation is the process of labeling data with metadata in preparation for training a machine learning model. Sentiment classification is the automated process of identifying opinions or feelings in text and labeling them as positive, negative, or neutral, based on the emotions expressed within them. Using NLP to interpret subjective data, sentiment classification helps understand how, for example, customers feel about products, services, or brands. The step of performing data annotation for sentiment classification may be performed via a computer, crowd sourcing platforms, human annotation based on set of rules, or using a data annotation algorithm, or service. FIG. 13 is a flowchart further illustrating the step of performing data annotation for sentiment classification.

Returning to FIG. 12, as shown by block 424, NLP model training is then performed with the annotated data, wherein examples of NLP models may include, but are not limited to deep learning classification models such as, Convolutional Neural Network (CNN), LSTM, or Transformers based models, such as BERT (Bidirectional Encoder Representations from Transformers). As previously mentioned, annotated data is data labeled with metadata for model training, for example a KWIC data that is labeled with a positive, negative, or neutral sentiment. The step of performing NLP model training with the annotated data includes for example, but not limited to, training a machine learning classification model by using the previously annotated data to tune the hyperparameters of the model until a desired accuracy is reached, for example, AUC $\geq$ 0.9. As shown by block 426 of FIG. 12, an NLP trained model is then saved to the storage device 104 (FIG. 2). The NLP trained model can then be used to predict entity-based sentiment with the NLP model or to determine media reputation scores, as will be described in additional detail herein.

As previously mentioned, FIG. 13 is a flowchart 430 further illustrating the step of performing data annotation for sentiment classification. Referring to FIG. 13, annotation job instructions are first written to allow the stored KWICs to be classified by the media data management module 160 (FIG. 3) as either positive, negative, or neutral (block 432). In accordance with the present invention, the job instructions, as provided by the media data management module 160 (FIG. 3), provide instructions to the annotation system for which keywords are to be used in annotation in order to classify each KWIC data item as positive, negative, or neutral. In other examples of implementation of this invention, a more granular classification may be used, such as very negative, negative, positive, very positive, or neutral. Other labels describing positive and negative, such as for example good and bad may also be used.

The keywords used during annotation are words that positively describe the entity, or the reputation drivers, or the reputation factors of the reputation drivers and separately, that negatively describe the entity, or the reputation drivers, or the reputation factors of the reputation drivers. Additional keywords that are used during the annotation process, for training a model to classify media data into media reputation drivers, are keywords that would associate a media data point as related to at least one reputation driver, or to at least one reputation factor of a reputation driver. These keywords may be stored within the storage device 104 (FIG. 2). It will be recalled that the reputation factors are survey questions aimed at measuring the opinion of a surveyed individual regarding operations of an entity for which reputation is sought. Each reputation factor falls within at least one reputation driver. The positive and negative words, and words that associate a media data point to at least one of the reputation drivers or to at least one of the reputation factors of a reputation driver, are the keywords that are used in annotation of the media data points, such as the KWIC data, as is explained in more detail herein. For example, if words are being selected for a reputation factor reading, "How would you rate the service at entity X?", the word "service" may be used as a keyword associating a media data point to the media reputation driver 'Products and Services', where related positive words may be "excellent", "outstanding" and "great", while negative words may include "poor", "bad", and "horrible". Words that are not included in the positive or negative words categories may be considered by the media data management module 160 (FIG. 3) to be neutral. Alternatively, neutral words may be predefined, like the positive and negative words, and stored within the storage device 104 (FIG. 2).

Since additional keywords within a media data point may be associated with a specific reputation factor or reputation driver, finding a specific keyword within KWIC data also allows for labelling of the KWIC data with the specific reputation factor or driver associated with the found factor or driver keyword, thereby allowing for labelling of the KWIC data with one or more specific reputation factors or drivers.

As shown by block 434, after the annotation job instructions are written, so as to allow the media data management module 160 (FIG. 3) to categorize each individual KWIC as either information stating something good about the entity, something bad about the entity, or simply contain information that is neutral with regard to the entity, quality of the annotation job instructions is tested by randomly selecting multiple rows of data from a selected dataset of KWIC data for initial annotation testing and such data is uploaded for annotation. As shown by block 436, the selected multiple rows of the selected KWIC data are then annotated and macro F1 score is calculated. F1 score is a common measure of accuracy in machine learning and other similar measures of accuracy may be used. Since F1 score is terminology that is well known by those having ordinary skill in the art, beyond the equations 3-5 below describing how F1 scores and related scores of accuracy may be calculated, additional detailed description is not provided herein.

$$F1 = \frac{2*Precision*Recall}{Precision+Recall} \qquad (Eq.\ 3)$$

$$Precision = \frac{\#\ True\ Positives}{\#\ (True\ Positives+False\ Positives)} \qquad (Eq.\ 4)$$

$$Recall = \frac{\#\ True\ Positives}{\#\ (True\ Positives+False\ Negatives)} \qquad (Eq.\ 5)$$

As shown by block 438, a determination is then made by the media data management module 160 (FIG. 3) as to whether the macro F1 score satisfies a predefined threshold value. For example, a required F1 score may be ninety percent. If the determined F1 score for the annotated multiple rows of the selected KWIC data satisfies the predefined threshold value, the remaining rows of the selected KWIC data are also annotated (block 440), since testing of the selected multiple rows of the KWIC data has proven the written annotation job instructions to be good. Alternatively, if the F1 score does not satisfy the predefined threshold value, the media data management module 160 (FIG. 3) notes the inconsistencies and ineffectiveness of the written annotation job instructions and new annotation job instructions are written (block 442), after which block 434 is repeated to randomly select multiple rows of data from a selected KWIC data for initial annotation testing of the newly written annotation job instructions, and such data is uploaded for annotation. The selected multiple rows of the selected KWIC data are then annotated and a new F1 score is calculated (block 436). A determination is then again made by the media data management module 160 (FIG. 3) as to whether the new F1 score satisfies the predefined threshold value (block 438). This sequence is repeated until the score does satisfy the predefined threshold value.

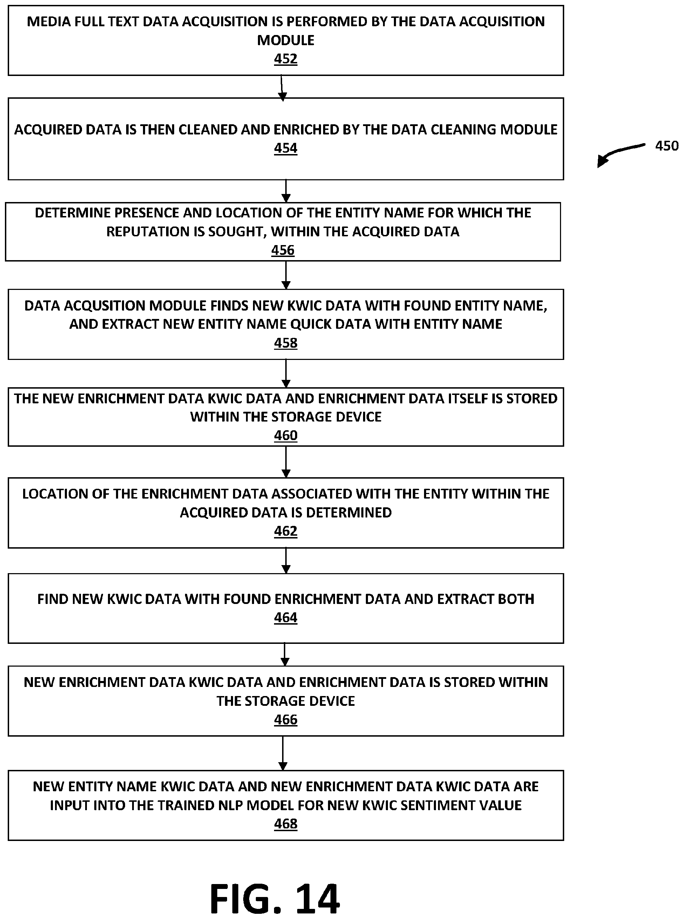

With the NLP model trained and saved, the KWICs stored, and a sentiment value assigned to each stored KWIC of one, zero, or minus one, the media data management module 160 (FIG. 3) then uses the NLP trained model to predict entity-based sentiment of new media data with the NLP trained model. This process is illustrated by the flowchart 450 of FIG. 14.

As previously mentioned, FIG. 14 illustrates the step of predicting entity-based sentiment with the trained NLP model. With the NLP model already trained, when new media data is received for analysis, as shown by block 452, media full text data acquisition is performed by the data acquisition module 122 (FIG. 3) so that the media data may be analyzed. As shown by block 454, the acquired data is then cleaned and enriched by the data cleaning module 120 (FIG. 3).

Presence and location of the entity name for which the reputation is sought, within the acquired data, is then determined, as shown by block 456. Specifically, the cleaned data is searched by the data acquisition module 122 to extract the entity name and find location of the entity name for which reputation is sought, using for example NER (named entity recognition) or other text mining information extraction or search algorithms. The data acquisition module 122 (FIG. 3) then finds new KWIC data with the found entity name, and extracts the new entity name KWIC data with the entity name, as shown by block 458. The new entity name KWIC data and entity name itself, is then stored within the storage device 102 (FIG. 2), as shown by block 460.

Location of the enrichment data associated with the entity for which the reputation is sought, within the acquired data, is then determined, as shown by block 462. The data acquisition module 122 (FIG. 3) then finds new KWIC data with the found enrichment data, and extracts the new enrichment data KWIC data with the enrichment data, as shown by block 464. The new enrichment data KWIC data and enrichment data itself, is then stored within the storage device 102 (FIG. 2), as shown by block 466.

As shown by block 468, the new entity name KWIC data and new enrichment data KWIC data are then input into the trained NLP model resulting in the new KWICs receiving a positive sentiment value of +1, a negative sentiment value of -1, or a neutral sentiment value of 0, so that each new KWIC has an associated sentiment value. Of course, as previously mentioned, other numerical or alphabetical labels may be chosen to label positive, negative, and neutral, and a finer scale of positivity and negativity may be set. Here for simplicity we use as an example labeling of 1 for positive, -1 for negative, and 0 for neutral.

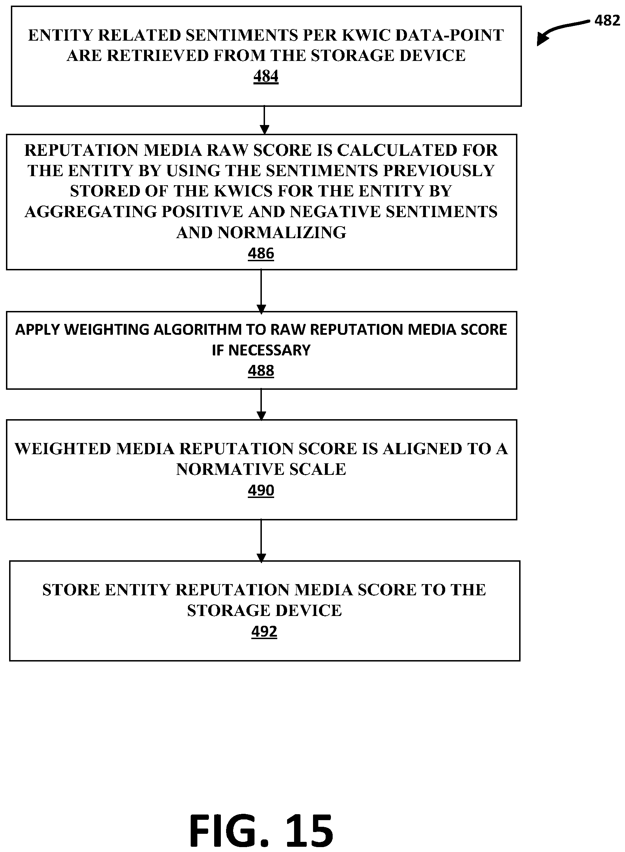

The step of calculating and storing media reputation scores (block 480), of FIG. 11, is further illustrated and described with regard to the flowchart 482 of FIG. 15. Referring to FIG. 15, entity related sentiments per KWIC data-point are retrieved from the storage device, as shown by block 484. A media reputation raw score is then calculated for the entity by using the sentiments previously stored of the KWICs for the entity, by aggregating all of the positive and negative sentiments for KWICs of the entity and normalizing the result to a 0 to 100 score, as shown by block 486. A non-limiting example of the way of determining the media reputation raw score by aggregating the sentiments of the KWICs of the entity and normalizing to a 0 to 100 score is depicted by equation 6, as illustrated herein.

$$\text{Raw Media Reputation Score} = 0.5 \times \left(100 \times \frac{\sum Positive + \sum Negative}{\sum Positive - \sum Negative} + 100\right) \qquad \text{(Eq. 6)}$$

As shown by block 488, the raw media reputation score of the entity then has a weighting algorithm applied to it, where the weighting is based on text sources, volume, reach, and impact so as to allow for greater consideration of KWICs from sources that are potentially more important, having greater influence, and/or having a stronger reputation or validity within the industry. One having ordinary skill in the art would know different techniques for weighting data or data sources, and therefore, while the following provides one example of a method that may be used to weigh KWICs, it should be noted that this is not intended to limit the present invention to this method of weighting. It is noted that it may not be necessary to apply a weighting algorithm to the raw media reputation score. This step depends upon whether there is a desire to weight certain sources differently.

It will be recalled that the storage device 102 (FIG. 2) has stored therein the entity name KWIC data, entity name itself, the URL address of the entity name KWIC data, title of an article, video, audio file, or other media data source, associated with the entity name KWIC data, sentiment value of the entity name KWIC data, and the specific keywords related to reputation factors or drivers that were discovered in the entity name KWIC data. In addition, it will be recalled that the storage device 102 (FIG. 2) also has stored therein the enrichment data KWIC data, the enrichment data itself, the URL address of the enrichment data KWIC data, title of an article, video, audio file, or other media data source, associated with the enrichment data KWIC data, sentiment value of the enrichment data KWIC data, and the specific keywords related to reputation factors or drivers that were discovered in the enrichment data KWIC data.

In accordance with an alternative embodiment of the invention, a quality step may be added to ensure that redundancy in storage and sentiment consideration of KWICs does not adversely affect the media data reputation score.

More specifically, it should be noted that certain KWICs may contain both an entity name and enrichment data. The process of finding, capturing, and storing entity name KWICs and separately enrichment data KWICs may result in the entity name KWIC and enrichment data KWIC being the same KWIC. This is the purpose of the quality step. In accordance with the alternative embodiment of the invention, the media data management module 160 determines if there are redundantly stored KWICs, and if so, it determines if the sentiment value for the redundantly stored KWICs are the same. If the KWIC is redundantly stored and the sentiment value of the redundantly stored KWICs is the same, one of the KWICs is deleted. Alternatively, the KWIC may be redundantly stored and the sentiment value of the redundantly stored KWICs may differ. If this happens a mediating algorithm is usually invoked to determine the most correct sentiment value of the duplicated KWIC, and in some cases even a human quality assurance (QA) process may be initiated if necessary, and only one copy of the redundant KWIC with the final determined sentiment value is stored.

Weighting of the media reputation raw score may be performed in one of many different ways. For exemplary purposes only, the following describes a three-step process that may be used for weighting. In a first step, prominence weight features are created per KWIC, so that a weight may be applied for KWIC sources that are potentially more important, having greater influence, and/or having a stronger reputation or validity within the industry. For nonlimiting exemplary purposes, the following equations 7-9 may be used in this calculation.

$$Prominence\ Weight =$$

$$\begin{cases} a_1 \quad if\ the\ entity\ name\ is\ not\ in\ the\ Title\ or\ Url,\ and\ 'PageType' \neq Twitter \\ \quad a_2 \quad if\ the\ entity\ name\ is\ in\ the\ Title\ or\ Url,\ and\ 'PageType' = Twitter \end{cases} \qquad (Eq.\ 7)$$

Where, for example, $a_1$ = numerical value < 1 (for example 0.5) and $a_2$= 1. Then, additional weighting steps may be added. For example, a second step, where a Weighted Sentiment is created for each KWIC as:

$$Weighted\ Sentiment = *\ (Impact\ *\ Prominence\ Weight)\ *\ Sentiment \qquad (Eq.\ 8)$$

Where, for example, $a_3$ < 1. Then, for example, as a third and final step, the weighted media reputation score for an entity in a given time period, such as, but not limited to, a week or month, may be defined as:

$$Weighted\ Media\ Reputation\ Score =$$

$$0.5\text{x}(100\text{x}(\frac{\sum Positive\ Weighted\ Sentiments + \sum Negative\ Weighted\ Sentiments}{\sum Positive\ Weighted\ Sentiments - \sum Negative\ Weighted\ Sentiments) + \#\ of\ Neutral\ Mentions} + 100)$$

$$(Eq.\ 9)$$

As shown by block 490, the weighted media reputation score is then aligned to a normative scale. An example of a process that may be used to normalize the resulting weighted media reputation score and align it to a normative scale includes, but is not limited to, applying logarithmic transformation in the form of equation 10.

$$f(x) = 100 * [1 + e^{-k[\log(\frac{x}{100-x}) + const]}]^{-\alpha} \qquad (Eq.\ 10)$$

Using the distributions of perception reputation scores collected over a period of time in the reputation storage device, and media reputation scores calculated with the trained model and the process described above, an iterative process is run to tune the parameters of equation six to normalize the media reputation score to the normative scale. The result is a final zero to one-hundred entity media reputation score. The entity media reputation score may then be stored to the storage device 104 (FIG. 2), as shown by block 492. The entity media reputation score may also be presented to a user of the present system and method.

Similar to the perception reputation drivers, when using media data for assessing the reputation of an entity, there are a series of drivers of reputation that are used and considered in determining the media reputation of the entity for which reputation is sought from media data. In accordance with one exemplary embodiment of the invention, there may be seven drivers of reputation used in calculating media data reputation scores, including, for example, products and services, innovation, workplace, conduct (also called governance), citizenship, leadership, and performance. These reputation driver names are for illustration purposes only and synonyms, other or additional reputation drivers or reputation driver names may be used in a similar manner. The media reputation drivers' scores may be calculated on a predefined cadence or time-interval, such as, but not limited to, daily, weekly, monthly, or quarterly, or even at real time, or near real time.

For determining the media reputation driver scores using the entity-based sentiment, a text analytics or a text mining model is used. As a nonlimiting example we describe in this embodiment the use of a machine learning deep learning NLP model, but it is important to mention that in other implementations of the current invention other text analysis models may be used such as other supervised machine learning models, unsupervised machine learning models such as Latent Dirichlet Allocation (LDA), other clustering models, a semi-supervised model, a combination of unsupervised and supervised models, or other text analytics and text mining methods.

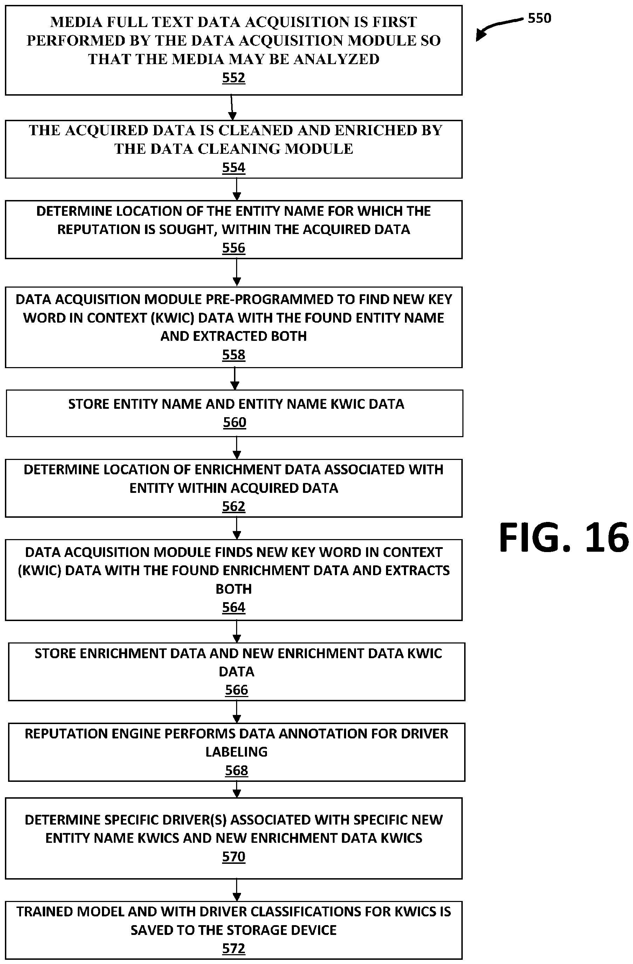

As previously mentioned, for determining the media reputation driver scores using the entity-based sentiment, an NLP machine learning model is trained, as shown by block 550 of FIG. 11. We describe here as a non-limiting example the training of an NLP machine learning model, such as a Transformers based model of the type of BERT (Bidirectional Encoder Representations from Transformers). Other machine learning models, such as LSTM, ensemble decision tree models, unsupervised clustering models, such as Latent Dirichlet Allocation (LDA), or even a combination of an unsupervised clustering model and a supervised learning classification model, may be used in a different implementation of this invention. FIG. 16 is a flowchart further illustrating steps taken in training the NLP machine learning model. As shown by block 552, media full text data acquisition is performed by the data acquisition module 122 (FIG. 3) so that the media may be analyzed. As shown by block 554, the acquired data is then cleaned and enriched by the data cleaning module 120 (FIG. 3) in a manner similar to that previously described.

Location of the entity name for which the reputation is sought, within the acquired data, is then determined, as shown by block 556. Specifically, the cleaned data is searched by the data acquisition module 122 to find location of the entity name for which reputation is sought. The data acquisition module 122 (FIG. 3) then used to determine new KWIC data with the found entity name and extracts the KWIC data with both the entity name and at least one keyword related to at least one of the reputation drivers, as shown by block 558. The new KWIC data with both the entity name and at least one keyword related to at least one of the reputation drivers, and the entity name itself, is then stored within the storage device 102 (FIG. 2), as shown by block 560.

Location of the enrichment data associated with the entity for which the reputation is sought, within the acquired data, is then determined, as shown by block 562. The data acquisition module 122 (FIG. 3) is then used to determine new KWIC data with the found enrichment data, and extracts the new enrichment data KWIC data with the enrichment data, as shown by block 564. The new enrichment data KWIC data and enrichment data itself, is then stored within the storage device 102 (FIG. 2), as shown by block 566.

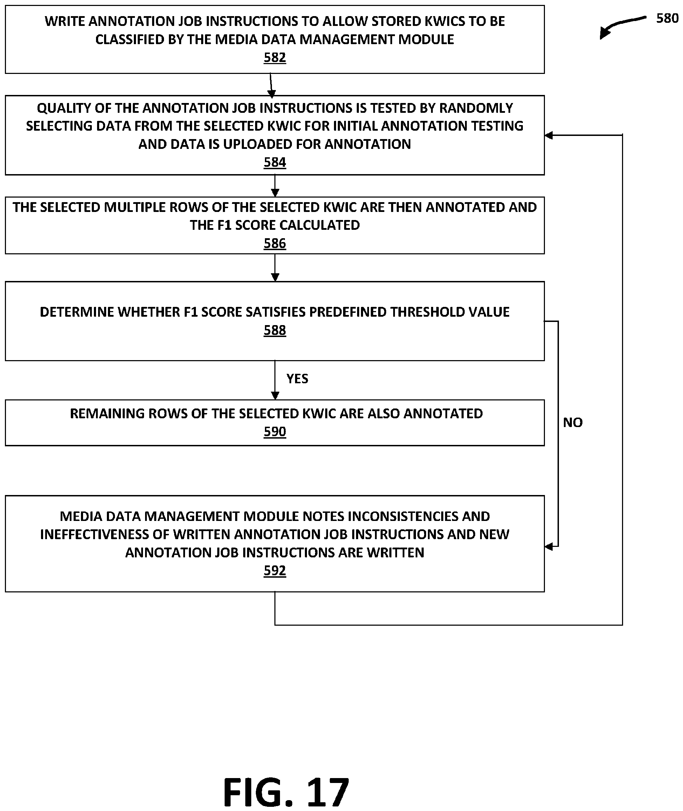

As shown by block 568, data annotation is then performed for reputation driver labeling, which is similar to the data annotation previously described for reputation factors, except now being provided for reputation drivers. FIG. 17 is a flowchart 580 further illustrating the step of performing data annotation for reputation driver labelling. Referring to FIG. 17, annotation job instructions are first written to allow the stored KWICs to be classified by the media data management module 160 as related to any of the reputation drivers and being either positive, negative, or neutral (block 582). In accordance with the present invention, the job instructions, as provided by the media data management module 160 (FIG. 3), provide instructions to the annotation system for which keywords are to be used in annotation.

The keywords used during annotation for driver labelling are words associated with a specific reputation driver, where the word is related to at least one reputation driver and in its vicinity there may be a word that either positively describes the entity when considering the at least one reputation driver, or negatively describes the entity when considering the at least one reputation driver. Each reputation driver individually has specific keywords that are used to classify a media data point to the associated media reputation driver, and to determine whether the keyword related to each reputation driver was mentioned positively or negatively to describe the entity. These keywords may be stored within the storage device 104 (FIG. 2). The specific words associated with each reputation driver and the positive and negative words are the keywords that are used in annotation of the KWIC data for media reputation drivers' classification and determining the media reputation drivers' scores. Words that are not included in the positive or negative words categories may be considered by the media data management module 160 (FIG. 3) to be neutral. Alternatively, neutral words may be predefined, like the positive and negative words, and stored within the storage device 104 (FIG. 2).

As shown by block 584, after the annotation job instructions are written, so as to allow the media data management module 160 (FIG. 3) to categorize each individual KWIC as classified to any of the reputation drivers and either having information stating something positive about the entity, something negative about the entity, or simply contain information that is neutral with regard to the entity, quality of the annotation job instructions is tested by randomly selecting multiple rows of data from a selected dataset of KWIC data for initial annotation testing and such data is uploaded for annotation. As shown by block 586, the selected multiple rows of the selected dataset of KWIC data are then annotated and macro F1 score is calculated. Since F1 score is terminology that is well known by those having ordinary skill in the art, a detailed description is not provided herein. It is noted that F1 Score is usually calculated using equations 3, 4, and 5 detailed above.

As shown by block 588, a determination is then made by the media data management module 160 (FIG. 3) as to whether the F1 score satisfies a predefined threshold value. For example, a required F1 score may be ninety percent. If the determined F1 score for the annotated multiple rows of the selected dataset of KWIC data satisfies the predefined threshold value, the remaining rows of the selected dataset of KWIC data are also annotated (block 590), since testing of the selected multiple rows of data of the KWIC dataset has proven the written annotation job instructions to be good.

Alternatively, if the F1 score does not satisfy the predefined threshold value, the media data management module 160 (FIG. 3) notes the inconsistencies and ineffectiveness of the written annotation job instructions and new annotation job instructions are written (block 592), after which there is a repeat of randomly selecting multiple rows of data from a selected dataset of KWIC data for initial annotation testing of the newly written annotation job instructions, and such data is uploaded for annotation (block 584). The selected multiple rows of the selected dataset of KWIC data are then annotated and a new F1 score is calculated (block 586). A determination is then again made by the media data management module 160 (FIG. 3) as to whether the new F1 score satisfies the predefined threshold value (block 588). This sequence is repeated until the score does satisfy the predefined threshold value.

Returning to FIG. 16 and the description of how the NLP machine learning model is trained, the media data management module 160 (FIG. 3) then determines which specific reputation driver, or drivers, are associated with which KWIC, including new entity name KWICs and new enrichment data KWICs (block 570). Specifically, as a keyword associated with a specific reputation driver is found within a new entity name KWIC and/or a new enrichment data KWIC, an identifier is stored with the KWIC that labels the KWIC with the specific reputation driver or drivers that were associated with the keyword found in the KWIC so that it is known which reputation driver is associated with which specific new KWIC. This labeling is similar to the labelling of the KWIC with the URL of where a KWIC was found, or the title of the media data point from which the KWIC was taken. The NLP machine learning model is now trained using the annotated KWIC data and the model hyperparameters are tuned. As shown by block 572, the trained model with reputation driver classifications for KWICs is then stored within the storage device 104 (FIG. 2).

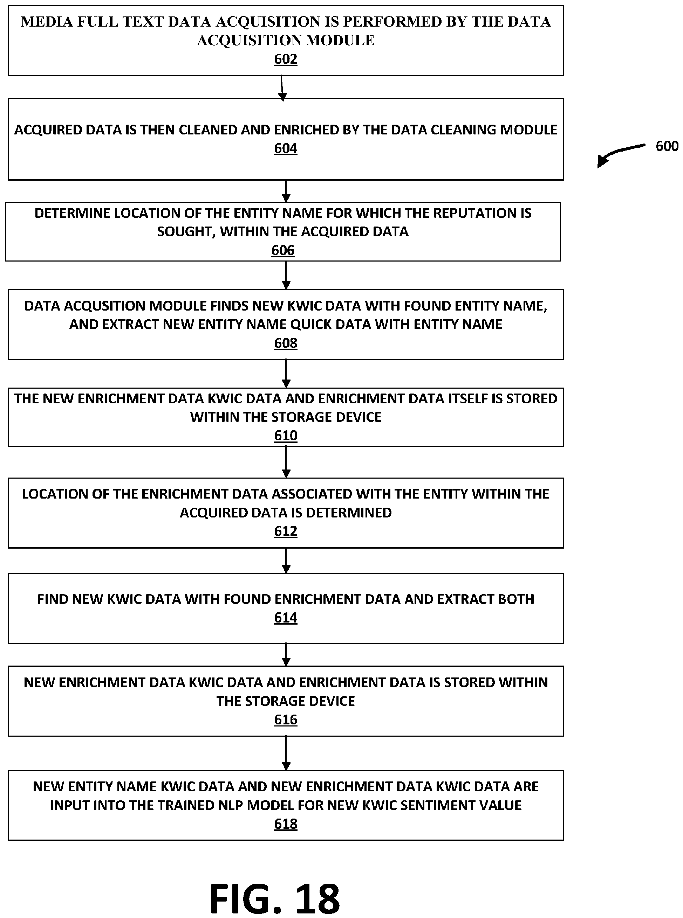

With the NLP model already trained, reputation driver classification of associated KWIC data is predicted (which may also be called inferenced or inferred), as further illustrated by FIG. 18. When new media data is received for analysis, as shown by block 602, media full text data acquisition is performed by the data acquisition module 122 (FIG. 3) so that the media data may be analyzed. As shown by block 604, the acquired data is then cleaned and enriched by the data cleaning module 120 (FIG. 3).

Location of the entity name for which the reputation is sought, within the acquired data, is then determined, as shown by block 606. Specifically, the cleaned data is searched by the data acquisition module 122 to find location of the entity name for which reputation is sought. The data acquisition module 122 (FIG. 3) then finds new KWIC data with the found entity name, and extracts the new entity name KWIC data with the entity name, as shown by block 608. The new entity name KWIC data and entity name itself, is then stored within the storage device 102 (FIG. 2), as shown by block 610.

Location of the enrichment data associated with the entity for which the reputation is sought, within the acquired data, is then determined, as shown by block 612. The data acquisition module 122 (FIG. 3) is then used to determine new KWIC data with the found enrichment data, and extracts the new enrichment data KWIC data with the enrichment data, as shown by block 614. The new enrichment data KWIC data and enrichment data itself, is then stored within the storage device 102 (FIG. 2), as shown by block 616.

As shown by block 618, the new entity name KWIC data and new enrichment data KWIC data are then input into the trained NLP model resulting in the new KWICs receiving a positive sentiment value of +1, a negative sentiment value of -1, or a neutral sentiment value of 0, so that each new KWIC has an associated sentiment value. The new KWIC data is then classified by the trained and stored NLP machine learning model by predicting (or inferring) the label of each KWIC within the new KWIC data as belonging to one or more of the media reputation drivers, or to none of the media reputation drivers. The predicted sentiment value and the media reputation driver labels are then stored per each KWIC together with the KWIC data and the entity name and the enrichment data within the storage device 102 (FIG. 2).

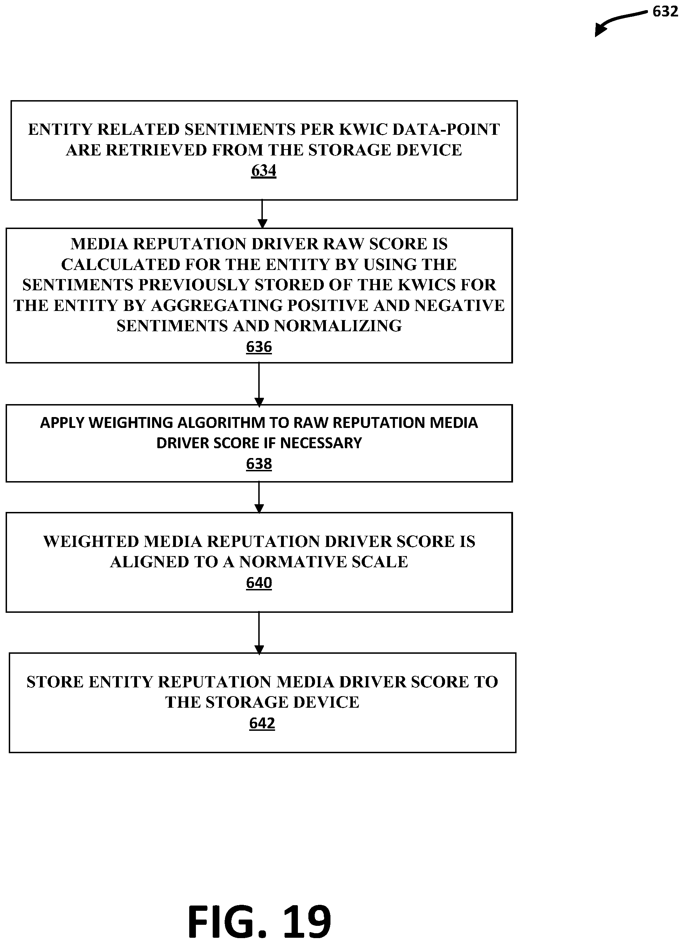

The step of calculating and storing media reputation driver scores (block 630), of FIG. 11, is further illustrated and described with regard to the flowchart 632 of FIG. 19. Referring to FIG. 19, entity related sentiments per KWIC data-point are retrieved from the storage device, as shown by block 634, per each of the seven media reputation drivers. A media reputation driver raw score is then calculated for the entity, for each of the media reputation drivers, by using the sentiments previously stored of the KWICs for the entity, aggregating all of the positive and negative sentiments for KWICs of the entity and normalizing the result to a 0 to 100 score, as shown by block 636. Another non-limiting way of determining the media reputation driver raw score, for each of the seven media reputation drivers, may be using equation 6 as previously illustrated. Of course, using seven media reputation drivers is just one example of the implementation, and as already mentioned other number of media reputation drivers may be sought in another implementation of this invention. It is also important to note that as the media reputation drivers scores are calculated on a regular cadence such as daily, weekly, or monthly, in some occurrences the data acquisition module may acquire media data as related to only part of the media reputation drivers. In such cases the media reputation drivers scores are calculated only for the drivers for which media data was acquired.

As shown by block 638, the raw media reputation driver score of the entity then has a weighting algorithm applied to it, where the weighting is based on text sources, volume, reach, and impact so as to allow for greater consideration of KWICs from sources that are potentially more important, having greater influence, and/or having a stronger reputation or validity within the industry. One having ordinary skill in the art would know different techniques for weighting data or data sources, and therefore, while the following provides one example of a method that may be used to weigh KWICs, it should be noted that this is not intended to limit the present invention to this method of weighting. It is noted that it may not be necessary to apply a weighting algorithm to the raw media reputation driver score. This step depends upon whether there is a desire to weight certain data sources differently.

It will be recalled that the storage device 102 (FIG. 2) has stored therein the entity name KWIC data, entity name itself, the URL address of the entity name KWIC data, title of an article, video, audio file, or other media source, associated with the entity name KWIC data, sentiment value of the entity name KWIC data, the specific factor and driver keywords that were discovered in the entity name KWIC data, and the number of the driver for which driver keywords were found in KWICs, for example, if there are seven drivers, at least one of the number one to seven, and if no driver keyword is found, the number zero. In addition, it will be recalled that the storage device 102 (FIG. 2) also has stored therein the data KWIC data, the enrichment data itself, the URL address of the enrichment data KWIC data, title of an article, video, audio file, or other media data source, associated with the enrichment data KWIC data, sentiment value of the enrichment data KWIC data, the specific factor and driver keywords that were discovered in the enrichment data KWIC data, and the number of the driver for which driver keywords were found in the enrichment data KWIC data, for example, if there are seven drivers, at least one of the number one to seven, and if no driver keyword is found, the number zero.

In accordance with an alternative embodiment of the invention, a quality step may be added to ensure that redundancy in storage and sentiment consideration of KWICs does not adversely affect the media reputation driver score. More specifically, it should be noted that certain KWICs may contain both an entity name and enrichment data. The process of finding, capturing, and storing entity name KWICs and separately enrichment data KWICs may result in the entity name KWIC and enrichment data KWIC being the same KWIC. This is the purpose of the quality step. In accordance with the alternative embodiment of the invention, the media data management module 160 (FIG. 3) determines if there are redundantly stored KWICs, and if so, it determines if the sentiment value for the redundantly stored KWICs are the same. If the KWIC is redundantly stored and the sentiment value of the redundantly stored KWICs is the same, one of the KWICs is deleted. Alternatively, the KWIC may be redundantly stored and the sentiment value of the redundantly stored KWICs may differ. If this happens a mediating algorithm may be invoked to determine the most correct sentiment value of the duplicated KWIC, and in some cases even a human quality assurance (QA) process is initiated if necessary, and only one copy of the redundant KWIC with the final determined sentiment value is stored.

Weighting of the media reputation driver raw score may be performed in one of many different ways. For exemplary purposes only, the following describes a three-step process that may be used for weighting. In a first step, prominence weight features are created per KWIC, so that a weight may be applied for KWIC sources that are potentially more important, having greater influence, and/or having a stronger reputation or validity within the industry. The previously provided equations 7, 8, 9 may be used in this calculation.

As shown by block 640, the weighted media reputation driver score is then aligned to a normative scale. An example of a process that may be used to align to a normative scale includes, but is not limited to, applying logarithmic transformation in the form of equation 10 previously presented.

Using the distributions of reputation driver scores collected over a period of time via the trained model, an iterative process is run to tune the parameters of equation 10 to normalize the media reputation driver score to the normative scale. The result is a final zero to one-hundred entity media reputation driver score. The entity media reputation driver score may then be stored to the storage device 104 (FIG. 2), as shown by block 642. The entity media reputation driver score may also be presented to a user of the present system and method.

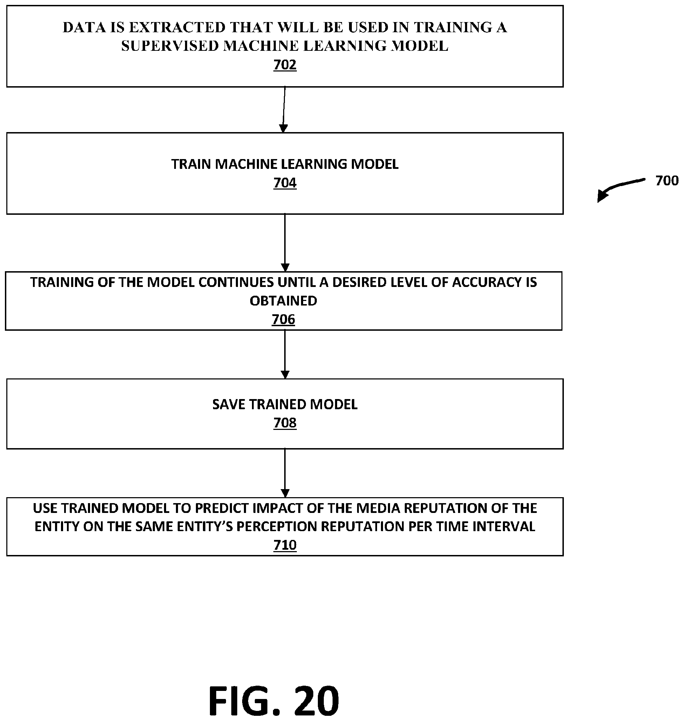

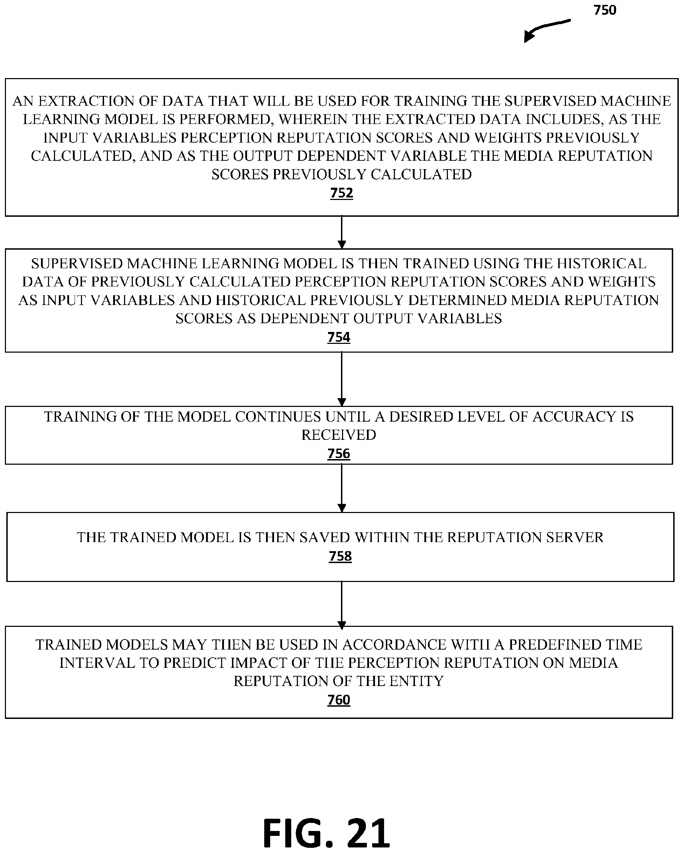

Having the reputation perception score of the entity and the media reputation score of the entity provides a better overall reputation assessment and scoring that considers both surveys and media data. In addition, it is noted that the media reputation score may have an effect on the reputation perception score and the reputation perception score may have an effect on the media reputation score. The following description, as provided with regard to FIG. 20 and FIG. 21, provides a manner of determining what that effect is and how to accommodate for the same.

FIG. 20 is a flowchart 700 illustrating how to predict media reputation to perception reputation impact through use of a supervised machine learning model. Specifically, the media data management module 160 (FIG. 3) uses a supervised machine learning model to predict the impact of media reputation on perception reputation by use of historical scores and weights. It should be noted, that the following is only one example of a manner that may be used to determine the impact of the media reputation on the perception reputation. As shown by block 702, an extraction of data that will be used for training the supervised machine learning model is performed, wherein the extracted data includes, as the output dependent variable, perception reputation scores previously calculated, and as input variables, the media reputation scores previously calculated, media reputation driver scores previously calculated, and weights of the media reputation driver scores as previously calculated. The scores used may be from a repeated time interval, such as weekly, or monthly calculated scores.

As shown by block 704, the supervised machine learning model is then trained using the historical data of previously determined media reputation scores, media reputation driver scores, and weights of the media reputation driver scores as input parameters, and the perception reputation scores as the output dependent variable. It is noted that any combination, derivation, only a part of, or a statistical property of the media reputation scores, media reputation driver scores, and weights of the media reputation driver scores may also be used as input variables (also called features) to train the supervised machine learning model. Here, for simplicity, we describe one example of inputs in the implementation of the model training.

In implementation, training of the supervised machine learning model that is used to predict the effect of media reputation on perception reputation is performed by the following steps. It is noted that such training may be performed in another manner known by one having ordinary skill in the art, which would be used for training of a supervised machine learning model.

The supervised machine learning model is trained by randomly separating the historical data to a train set and a test set and tuning the hyperparameters of the model multiple times until a desired accuracy is reached. For example, in each iteration 80% of the historical data may be used as a train set and 20% of the historical data may be used as a test set. The separation of the data to a train set and test set is well known in the art and will not be further described here. Both the train set, and the test set, contain matching data sets per entity and a pre-defined time-point of media reputation scores and media reputation drivers scores as inputs and perception reputation scores as outputs. As a first step, the model is trained using the inputs of the media reputation scores and media driver scores, for one or multiple time-points with the single output set of the dependent variable of the perception reputation scores from a particular time point (for example a certain month), with or without a time lag, for example of one month. This process may be performed for one entity or multiple entities. As a second step in training the supervised machine learning model, this same process is then performed for the same entity or a set of entities using the input variables and output variables from another point in time (for example a consecutive month), and so forth, until the supervised machine learning model is trained for each of the entities, resulting in a set of supervised machines learning trained models, per each of the entities for which reputation is sought. To achieve a higher accuracy the models may be trained using as input variables time series of media reputation scores and media reputation driver scores per each set of output dependent variables of perception reputation scores. For example, the time series may be of three months of data. When training a supervised machine learning model per one entity, the model training may be performed tens or even hundreds of times to increase the accuracy of the model by tuning the hyperparameters. Some examples of supervised machine learning models that may be trained on time series of input variables of media reputation scores and media reputation drivers scores may include, but not limited to, a VAR (vector autoregression) and VER (vector error correction) models, or LSTM models. Preferably, training of the model continues until a desired level of accuracy is received, as shown by block 706. For example, training may continue until a seventy percent accuracy is obtained.

As shown by block 708, the trained model is then saved within the reputation server 100. Each of the trained supervised learning models are then used to predict the effect of media reputation scores on perception reputation scores, as would be understood by one having ordinary skill in the art. As shown by block 710, the trained models may then be used in accordance with a predefined time interval to predict impact of the media reputation of the entity on the same entity's perception reputation per time interval, such as, but not limited to, per month, to help entities manage their reputation.

As one nonlimiting example of implementation, the trained models may then be used to predict (which may be also called to inference or to infer) whether the impact of the media reputation on the perception reputation of an entity will be positive, negative or neutral in a certain period of time. For example, if the trained model predicts that the perception reputation score will increase above a pre-set threshold in the following month compared to the previous month it is considered that the media reputation will have a positive impact on the perception reputation in that month for this entity. Similarly, if the trained model predicts that for a certain entity and their media reputation scores of the last two months the perception reputation score will decrease below a pre-set threshold in the following month compared to the previous month it is considered that the media reputation will have a negative impact on the perception reputation in that month for this entity. If the trained model per entity in a certain time period does not predict neither statistically significant increase nor decrease of the entity's perception reputation score in the following month above or below the pre-set thresholds it is considered that the media reputation will have a neutral impact or will have no impact on the perception reputation score in the next month.

FIG. 21 is a flowchart 750 illustrating how to predict perception reputation to media reputation impact through use of a supervised machine learning model. Specifically, the media data management module 160 (FIG. 3) uses a supervised machine learning model to predict the impact of perception reputation on media reputation by use of historical scores and weights. It should be noted, that the following is only one example of a manner that may be used to determine the impact of the perception reputation on the media reputation of an entity. As shown by block 752, an extraction of data that will be used for training the supervised machine learning model is performed, wherein the extracted data includes, as the input variables perception reputation scores and weights previously calculated, and as the output dependent variable the media reputation scores previously calculated. The scores used may be from a repeated time interval, such as weekly, or monthly calculated scores.

As shown by block 754, the supervised machine learning model is then trained using the historical data of previously calculated perception reputation scores and weights as input variables and historical previously determined media reputation scores as dependent output variables.

In implementation, training of the supervised machine learning model that is used to predict the impact of perception reputation on media reputation is performed by similar steps to that describe above for predicting media reputation impact on perception reputation per entity where now the perception reputation scores, the perception reputation driver scores and weights are used as the input variables and the media reputation score, with or without a time-lag, for example of one month, is used as the output dependent variable. This training may be performed as described previously per multiple entities or per one entity resulting in a multiple set of trained models per entity for which reputation is being sought.

It is noted that such training may be performed in another manner known by one having ordinary skill in the art, which would be used for training of a supervised machine learning model.

Preferably, training of the model continues until a desired level of accuracy is received, as shown by block 756. For example, training may continue until a seventy percent accuracy is obtained.

As shown by block 758, the trained model is then saved within the reputation server 100. Each of the trained supervised machine learning models are then used to predict (which may be also called to inference or to infer) the effect of perception reputation scores on media reputation scores per entity, as would be understood by one having ordinary skill in the art. As shown by block 760, the trained models may then be used in accordance with a predefined time interval to predict impact of the perception reputation on media reputation of the entity, such as, but not limited to, per month, to help entities manage their reputation.

As one nonlimiting example of implementation, the trained models may then be used to predict (which may be also called to inference or to infer) whether the impact of the perception reputation on the media reputation of an entity will be positive, negative or neutral in a certain period of time. For example, if the trained model predicts that for a certain entity and their perception reputation scores of the last two months the media reputation score will increase above a pre-set threshold in the following month compared to the previous month it is considered that the perception reputation will have a positive impact on the media reputation in that month for this entity. Similarly, if the trained model predicts that for a certain entity and their perception reputation scores of the last two months the media reputation score will decrease below a pre-set threshold in the following month compared to the previous month it is considered that the perception reputation will have a negative impact on the media reputation in that month for this entity. If the trained model per entity in a certain time period does not predict neither statistically significant increase nor decrease of the entity's media reputation score in the following month above or below the pre-set thresholds it is considered that the perception reputation will have a neutral impact, or will have no impact on the media reputation score in the next month.

In accordance with an alternative embodiment of the invention, the input variables (also called features) to the supervised machine learning model may be enhanced by using mathematical manipulations of the input variables, also referred to by one of ordinary skill in the art as feature engineering. Such mathematical manipulation may include, but is not limited to, statistical derivations of the input scores and weights, such as, but not limited to, average and standard deviation, as well as using scores of a range of lags of the time unit, such as, but not limited to, a few weeks, or a few months. The result of using the statistical derivations (engineered features) of the input scores and weights in addition to the scores and weights themselves may increase the accuracy of prediction of the impact of media reputation on perception reputation of the entity for which reputation is sought, or of the perception reputation on the media reputation of the entity for which reputation is sought in a certain period of time and hence enhancing the ability of the entity to manage their reputation with higher precision.

In accordance with one embodiment of the invention, different computation results may be provided or displayed to an entity seeking its media reputation. For example, the media management module may display per period of time, for example a day, week, month or quarter, the following nonlimiting list of media reputation results: media reputation scores, media reputation driver scores and weights, media reputation factor scores and weights, prevalence of media reputation drivers or factors within the media reputation data of the entity, media reputation scores weights and volumes by media channel, media reputation trends over a time period (for example, six months), impact of the media reputation on the perception reputation of the entity in a certain time period, the impact of perception reputation on the media reputation of the entity in a certain time period, combined overall reputation scores and weights form media and perception reputation, benchmarking information of the entity's media reputation and perception reputation comparing to other entities such as competitors, industries or regions. Additional components may include analyses of impact and reach of media data on entity's reputation, topic analysis of the media data that drove the media reputation scores in a certain period of time, deep dives into the data for root cause analyses, and providing the entity with actionable recommendations and insights derived from the media reputation and perception reputation analyses. These may help the entity manage their reputation over time, understand and possibly influence the effect of their reputation on their various business outcomes.

It is noted that media data may be collected daily from partnered data providers via an application programming interface (API), or by scraping, or web crawling, or by other means, for a particular entity, such as company, corporate, brand, person, or industry, and is saved as "full text" in the database, such as the storage device 104 described in Fig. 2. Reputation scores may be calculated on a regular cadence such as daily, weekly, monthly, or quarterly.

It is also noted that the described here derivation of entity-based sentiment and classification of media data into reputation drivers may be done on full text articles and other media data components in other implementations of the current invention.

## Claims

1. A method for determining reputation of an entity from at least one media data source, comprising the steps of:

using at least one of the group consisting of a text analysis model and a text mining model to determine if a sentiment toward an entity for which reputation is sought is positive, negative, or neutral by use of at least one media data point in at least one media data source, wherein a sentiment is an emotion about the entity portrayed by the at least one media data point, and assigning a sentiment numerical value to the at least one media data point based on whether the determined sentiment toward the entity is positive, negative, or neutral;

determining at least one media reputation score of the entity for which reputation is sought, wherein the media reputation score is a measure of emotion portrayed about the entity in the media;

training a classification model so that the classification model will associate at least one media data point with at least one media reputation driver, where a media reputation driver is a driver of reputation that is considered when assessing media reputation of the entity for which reputation is sought;

using the classification model to associate at least one media data point with the at least one media reputation driver, or determine that the at least one media data point cannot be associated with any of the at least one media reputation drivers; and

determining an entity media reputation driver score for each of the at least one media reputation drivers based on the at least one media data source.

2. The method of claim 1, where the text analysis and text mining model is a natural language processing model, further comprising the step of training the natural language processing model using media data labelled with a positive, negative, or neutral sentiment toward an entity for which reputation is sought.

3. The method of claim 1, further comprising the step of determining a weight of importance of each of at least one media reputation drivers as contributing to the perception reputation of the entity for which reputation is sought.

4. The method of claim 1, further comprising the step of determining a weight of importance of each of at least one media reputation drivers as contributing to the media reputation of the entity for which reputation is sought.

5. The method of claim 1, further comprising the step of normalizing and/or aligning the at least one media reputation score and the at least one media reputation driver score to a normative scale.

6. The method of claim 1, wherein the step of determining at least one media reputation score of the entity for which reputation is sought, further comprises calculating a raw media reputation score from the determined sentiment values assigned to the at least one media data point regarding the entity for which reputation is sought, by aggregating the positive, negative, and/or neutral, determined sentiments for the entity.

7. The method of claim 6, further comprising the steps of weighting the determined sentiment values based on the media data source and normalizing the aggregated positive, negative, and/or neutral determined sentiments for the entity, resulting in a score on a normative scale.

8. The method of claim 1, wherein the step of determining an entity media reputation driver score for each of the at least one media reputation drivers further comprises calculating a raw media reputation driver score from the determined sentiment values assigned to the at least one media data point that was determined to belong to the at least one driver regarding the entity for which reputation is sought, by aggregating the positive, negative and/or neutral, determined sentiments for the entity.

9. The method of claim 8, further comprising the step of weighting the determined sentiment values based on the media data source and normalizing the aggregated positive, negative, and/or neutral determined sentiments for the entity, resulting in a score on a normative scale.

10. The method of claim 1, where at least one machine learning model is used to predict the impact of media reputation on perception reputation within a predefined time-interval.

11. The method of claim 1, where at least one machine learning model is used to predict the impact of perception reputation on media reputation within a predefined time-interval.

12. The method of claim 8, where the prevalence of at least one media reputation driver is determined within the at least one media data source that was used to calculate entity's media reputation score.

13. The method of claim 1, further comprising the step of using at least one machine learning model to determine the impact on at least one business outcome (also called supportive behavior) from a combination of reputation scores, selected from the group consisting of perception reputation, media reputation, reputation drivers, ESG (environmental, social, governance) scores or ratings, and any statistical derivation of these.

14. The method of claim 1, where the text analysis and text mining model is a machine learning model selected from the group consisting of a supervised machine learning model, an unsupervised machine learning model, a deep learning model, and a combination of models.

15. The method of claim 8, wherein the set of media reputation drivers includes products and services, innovation, workplace, conduct (also called governance), citizenship, leadership, and performance.

1

100

20a

20b

Internet
10

30a

30b

30c

20c

FIG. 1

REPUTATION ENGINE
108

SOFTWARE
110

O/S
170

MEMORY
106

STORAGE
DEVICE
104

PROCESSOR
102

LOCAL BUS 172

INPUT /
OUTPUT
DEVICES
174

100

# FIG. 2

| DATA CLEANING MODULE 120 | REPUTATION PERCEPTION SCORE MODULE 130 |

| DATA ACQUISITION MODULE 122 | REPUTATION DRIVER SCORE MODULE 140 |

| MEDIA DATA MANAGEMENT MODULE 160 | BEHAVIORAL CONNECTION MODULE 150 |

| OPERATING SYSTEM 170 |

MEMORY
106

# FIG. 3

DATA CLEANING TO DERIVE A HIGHLY RELIABLE DEMOGRAPHICALLY REPRESENTATIVE SAMPLE OF A SURVEY POPULATION, WHERE THE SAMPLE IS SIZED TO PROVIDE A 95% OR GREATER CONFIDENCE INTERVAL, FROM PEOPLE WHO ARE FAMILIAR WITH THE ENTITY SURVEYED ABOUT
202

↓

DETERMINE A REPUTATION PERCEPTION SCORE OF THE ENTITY, WHERE THE REPUTATION PERCEPTION SCORE IS A MEASURE OF A LEVEL OF EMOTIONAL CONNECTION OF THE SURVEYED WITH THE ENTITY FOR WHICH REPUTATION IS TO BE MEASURED
220

↓

DETERMINE REPUTATION FACTOR SCORES
240

↓

DETERMINE REPUTATION DRIVER SCORES
260

↓

DETERMINE A REPUTATION DRIVER WEIGHT AND A REPUTATION DRIVER ORDER OF IMPORTANCE
280

# FIG. 4

202

DETERMINE SAMPLE SIZE OF POPULATION THAT IS DEMOGRAPHICALLY REPRESENTATIVE OF DESIRED SURVEY POPULATION
204

FROM THE DEMOGRAPHICALLY REPRESENTATIVE SAMPLE THAT IS SIZED TO PROVIDE A 95% OR GREATER CONFIDENCE INTERVAL, ONLY SELECT THOSE FAMILIAR WITH THE ENTIY FOR WHICH REPUTATION IS SOUGHT
206

PERFORM CHEATING TEST / UNRELIABILITY TEST TO REMOVE THOSE NOT LIKELY TO PROVIDE TRUE RESPONSES TO SURVEY QUESTIONS
208

# FIG. 5

TRANSMIT EMOTIONAL CONNECTION SURVEY QUESTIONS TO THE UNIQUE GROUP COVERING THE CATEGORIES OF ESTEEM, ADMIRATION AND RESPECT, TRUST, AND OVERALL FEELING
222

RESULTING EMOTIONAL CONNECTION SURVEY QUESTION RANKINGS ARE THEN CONVERTED FROM A RAW SCALE TO A ZERO TO ONE HUNDRED SCALE
224

THE RETURNED DATA IS CULTURALLY WEIGHTED TO REMOVE CULTURAL BIAS IN THAT DATA
226

DEMOGRAPHIC WEIGHTING OF RETURNED DATA TO ACCOMMODATE MISSED DEMOGRAPHIC QUOTAS
228

RESULTS ARE AGGREGATED WITHIN EACH CATEGORY OF PERCEPTION SCORE TO PROVIDE A SINGLE AGREGATED REPUTATION PERCEPTION SCORE WITHIN EACH CATEGORY, AND THE AGGREGATED RESULTS ARE AVERAGED TO PROVIDE A SINGLE FINAL REPUTATION PERCEPTION SCORE
230

SINGLE FINAL REPUTATION PERCEPTION SCORE IS CATEGORIZED INTO A NORMATIVE SCALE TO ILLUSTRATE MEANING TO THE REQUESTING ENTITY SEEKING REPUTATION DETERMINATION
232

220

# FIG. 6

242

```
┌─────────────────────────────────────────────────────────┐
│   TRANSMIT PRACTICAL THINKING SURVEY QUESTIONS (FACTORS) TO│
│                   THE UNIQUE GROUP                          │
│                        244                                 │
└─────────────────────────────────────────────────────────┘
                            │
                            ▼
┌─────────────────────────────────────────────────────────┐
│   RESULTING PRACTICAL THINKING  SURVEY QUESTION RANKINGS ARE│
│   THEN CONVERTED FROM A RAW SCALE TO A ZERO TO ONE HUNDRED  │
│                        SCALE                               │
│                        246                                 │
└─────────────────────────────────────────────────────────┘
                            │
                            ▼
┌─────────────────────────────────────────────────────────┐
│   DETERMINE IF CULTURAL WEIGHTING IS NECESSARY, AND IF SO, THE│
│   RETURNED DATA IS CULTURALLY WEIGHTED TO REMOVE CULTURAL  │
│                   BIAS IN THAT DATA                         │
│                        248                                 │
└─────────────────────────────────────────────────────────┘
                            │
                            ▼
┌─────────────────────────────────────────────────────────┐
│   DEMOGRAPHIC WEIGHTING OF RETURNED DATA TO ACCOMMODATE    │
│              MISSED DEMOGRAPHIC QUOTAS                      │
│                        250                                 │
└─────────────────────────────────────────────────────────┘
                            │
                            ▼
┌─────────────────────────────────────────────────────────┐
│   AGGREGATE THE X NUMBER OF RESULTING FACTOR SCORES FOR    │
│   EACH FACTOR WITHIN EACH FACTOR TO PROVIDE A SINGLE       │
│        AGGREGATED FACTOR SCORE FOR EACH FACTOR             │
│                        252                                 │
└─────────────────────────────────────────────────────────┘
```

# FIG. 7

262

REDUNDANCY ANALYSIS IS FIRST RUN ON THE FACTORS TO REMOVE REDUNDANT FACTORS AND REMOVE COLLINEARITY IN THE DATA
264

UNSUPERVISED LEARNING CLUSTERING IS PERFORMED TO DETERMINE TO WHICH OF THE DRIVERS EACH FACTOR BELONGS
266

TAKE THE SCORE FOR EACH FACTOR WITHIN A DRIVER AND AVERAGE THEM TO DERIVE THE REPUTATION DRIVER SCORE FOR EACH DRIVER
268

# FIG. 8

300

TRANSMIT BEHAVIORAL CONNECTION SURVEY QUESTIONS TO THE
UNIQUE GROUP
302

RESULTING BEHAVIORAL CONNECTION SURVEY QUESTION
RANKINGS ARE THEN CONVERTED FROM A RAW SCALE TO A ZERO TO
ONE HUNDRED SCALE
304

THE RETURNED DATA IS CULTURALLY WEIGHTED TO REMOVE
CULTURAL BIAS IN THAT DATA
306

DEMOGRAPHIC WEIGHTING OF RETURNED DATA TO ACCOMMODATE
MISSED DEMOGRAPHIC QUOTAS
308

RESULTS ARE AGGREGATED WITHIN EACH QUESTION TO PROVIDE A
SINGLE AGREGATED BEHAVIORAL CONNECTION QUESTION SCORE
310

PRIORITIZE IMPORTANCE OF DRIVERS AND/OR FACTORS FOR
PREDICTING EACH OF THE BEHAVIORAL CONNECTIONS BETWEEN THE
PUBLIC AND THE ENTITY
312

# FIG. 9

A SET OF SUPERVISED MACHINE LEARNING MODELS ARE TRAINED USING THE HISTORICAL DATA OF PREVIOUSLY DETERMINED DRIVER SCORES, FACTOR SCORES, REPUTATION SCORES, AND OTHER PERCEPTION SCORES USED AS INPUT VARIABLES, FOR EACH BEHAVIORAL CONNECTION BUSINESS OUTCOME SCORE, WHICH IS THE DEPENDENT VARIABLE
**352**

350

TRAINED MODELS ARE THEN SAVED WITHIN THE REPUTATION SERVER
**354**

EACH OF THE TRAINED SUPERVISED LEARNING MODELS ARE THEN USED TO PREDICT EACH OF THE BUSINESS OUTCOMES FROM AN INPUT SET OF PERCEPTION SCORES
**356**

# FIG. 10

TRAIN NATURAL LANGUAGE PROCESSING (NLP) MODEL
USING ENTITY BASED SENTIMENT
402

400

THE NLP MODEL IS USED BY THE MEDIA DATA
MANAGEMENT MODULE TO PREDICT ENTITY-BASED
SENTIMENT
450

REPUTATION MEDIA SCORES ARE DETERMINED
480

NLP MACHINE LEARNING MODEL IS TRAINED
550

PREDICT DRIVER CLASSIFICATION OF ASSOCIATED
KWIC DATA
600

DETERMINE ENTITY MEDIA REPUTATION DRIVER
SCORES
630

DETERMINE MEDIA REPUTATION DRIVER WEIGHTS
670

MEDIA REPUTATION SCORES AND MEDIA REPUTATION
DRIVER SCORES ARE PROCESSED BY A NORMATIVE
SCALE ALIGNMENT ALGORITHM
700

# FIG. 11

MEDIA FULL TEXT DATA ACQUISITION IS FIRST
PERFORMED BY THE DATA ACQUISITION MODULE
LOCATED WITHIN THE MEMORY SO THAT THE MEDIA
MAY BE ANALYZED
406

↓

THE ACQUIRED DATA IS CLEANED AND ENRICHED BY
THE DATA CLEANING MODULE
408

↓

DETERMINE LOCATION OF THE ENTITY NAME FOR WHICH THE
REPUTATION IS SOUGHT, WITHIN THE ACQUIRED DATA
410

↓

DATA ACQUISITION MODULE PRE-PROGRAMMED TO FIND KEY
WORD IN CONTEXT (KWIC) DATA WITH THE FOUND ENTITY NAME
AND EXTRACTED BOTH
412

↓

STORE ENTITY NAME AND ENTITY NAME KWIC DATA
414

↓

DETERMINE LOCATION OF ENRICHMENT DATA ASSOCIATED WITH
ENTITY WITHIN ACQUIRED DATA
416

↓

DATA ACQUISITION MODULE PRE-PROGRAMMED TO FIND KEY
WORD IN CONTEXT (KWIC) DATA WITH THE FOUND ENRICHMENT
DATA AND EXTRACTED BOTH
418

↓

STORE ENRICHMENT DATA AND ENRICHMENT DATA KWIC DATA
420

↓

REPUTATION ENGINE PERFORMS DATA ANNOTATION FOR
SENTIMENT CLASSIFICATION
422

↓

NLP MODEL TRAINING PERFORMED WITH THE ANNOTATED DATA
424

↓

NLP TRAINED MODEL SAVED TO THE STORAGE DEVICE
426

404

# FIG. 12

WRITE ANNOTATION JOB INSTRUCTIONS TO ALLOW STORED KWICS TO BE CLASSIFIED BY THE MEDIA DATA MANAGEMENT MODULE
432

QUALITY OF THE ANNOTATION JOB INSTRUCTIONS IS TESTED BY RANDOMLY SELECTING DATA FROM THE SELECTED KWIC FOR INITIAL ANNOTATION TESTING AND DATA IS UPLOADED FOR ANNOTATION
434

THE SELECTED MULTIPLE ROWS OF THE SELECTED KWIC DATA ARE THEN ANNOTATED AND MACRO F1 SCORE CALCULATED
436

DETERMINE WHETHER THE MACRO F1 SCORE SATISFIES PREDEFINED THRESHOLD VALUE
438

YES

REMAINING ROWS OF THE SELECTED KWIC ARE ALSO ANNOTATED
440

NO

MEDIA DATA MANAGEMENT MODULE NOTES INCONSISTENCIES AND INEFFECTIVENESS OF WRITTEN ANNOTATION JOB INSTRUCTIONS AND NEW ANNOTATION JOB INSTRUCTIONS ARE WRITTEN
442

430

# FIG. 13

MEDIA FULL TEXT DATA ACQUISITION IS PERFORMED BY THE DATA ACQUISITION MODULE
452

ACQUIRED DATA IS THEN CLEANED AND ENRICHED BY THE DATA CLEANING MODULE
454

450

DETERMINE PRESENCE AND LOCATION OF THE ENTITY NAME FOR WHICH THE REPUTATION IS SOUGHT, WITHIN THE ACQUIRED DATA
456

DATA ACQUSITION MODULE FINDS NEW KWIC DATA WITH FOUND ENTITY NAME, AND EXTRACT NEW ENTITY NAME QUICK DATA WITH ENTITY NAME
458

THE NEW ENRICHMENT DATA KWIC DATA AND ENRICHMENT DATA ITSELF IS STORED WITHIN THE STORAGE DEVICE
460

LOCATION OF THE ENRICHMENT DATA ASSOCIATED WITH THE ENTITY WITHIN THE ACQUIRED DATA IS DETERMINED
462

FIND NEW KWIC DATA WITH FOUND ENRICHMENT DATA AND EXTRACT BOTH
464

NEW ENRICHMENT DATA KWIC DATA AND ENRICHMENT DATA IS STORED WITHIN THE STORAGE DEVICE
466

NEW ENTITY NAME KWIC DATA AND NEW ENRICHMENT DATA KWIC DATA ARE INPUT INTO THE TRAINED NLP MODEL FOR NEW KWIC SENTIMENT VALUE
468

# FIG. 14

ENTITY RELATED SENTIMENTS PER KWIC DATA-POINT
ARE RETRIEVED FROM THE STORAGE DEVICE
484

REPUTATION MEDIA RAW SCORE IS CALCULATED FOR
THE ENTITY BY USING THE SENTIMENTS PREVIOUSLY
STORED OF THE KWICS FOR THE ENTITY BY
AGGREGATING POSITIVE AND NEGATIVE SENTIMENTS
AND NORMALIZING
486

APPLY WEIGHTING ALGORITHM TO RAW REPUTATION MEDIA SCORE
IF NECESSARY
488

WEIGHTED MEDIA REPUTATION SCORE IS ALIGNED TO A
NORMATIVE SCALE
490

STORE ENTITY REPUTATION MEDIA SCORE TO THE
STORAGE DEVICE
492

482

# FIG. 15

MEDIA FULL TEXT DATA ACQUISITION IS FIRST PERFORMED BY THE DATA ACQUISITION MODULE SO THAT THE MEDIA MAY BE ANALYZED
552

THE ACQUIRED DATA IS CLEANED AND ENRICHED BY THE DATA CLEANING MODULE
554

DETERMINE LOCATION OF THE ENTITY NAME FOR WHICH THE REPUTATION IS SOUGHT, WITHIN THE ACQUIRED DATA
556

DATA ACQUISITION MODULE PRE-PROGRAMMED TO FIND NEW KEY WORD IN CONTEXT (KWIC) DATA WITH THE FOUND ENTITY NAME AND EXTRACTED BOTH
558

STORE ENTITY NAME AND ENTITY NAME KWIC DATA
560

DETERMINE LOCATION OF ENRICHMENT DATA ASSOCIATED WITH ENTITY WITHIN ACQUIRED DATA
562

DATA ACQUISITION MODULE FINDS NEW KEY WORD IN CONTEXT (KWIC) DATA WITH THE FOUND ENRICHMENT DATA AND EXTRACTS BOTH
564

STORE ENRICHMENT DATA AND NEW ENRICHMENT DATA KWIC DATA
566

REPUTATION ENGINE PERFORMS DATA ANNOTATION FOR DRIVER LABELING
568

DETERMINE SPECIFIC DRIVER(S) ASSOCIATED WITH SPECIFIC NEW ENTITY NAME KWICS AND NEW ENRICHMENT DATA KWICS
570

TRAINED MODEL AND WITH DRIVER CLASSIFICATIONS FOR KWICS IS SAVED TO THE STORAGE DEVICE
572

550

**FIG. 16**

WRITE ANNOTATION JOB INSTRUCTIONS TO ALLOW STORED KWICS TO BE CLASSIFIED BY THE MEDIA DATA MANAGEMENT MODULE
582

QUALITY OF THE ANNOTATION JOB INSTRUCTIONS IS TESTED BY RANDOMLY SELECTING DATA FROM THE SELECTED KWIC FOR INITIAL ANNOTATION TESTING AND DATA IS UPLOADED FOR ANNOTATION
584

THE SELECTED MULTIPLE ROWS OF THE SELECTED KWIC ARE THEN ANNOTATED AND THE F1 SCORE CALCULATED
586

DETERMINE WHETHER F1 SCORE SATISFIES PREDEFINED THRESHOLD VALUE
588

YES

REMAINING ROWS OF THE SELECTED KWIC ARE ALSO ANNOTATED
590

NO

MEDIA DATA MANAGEMENT MODULE NOTES INCONSISTENCIES AND INEFFECTIVENESS OF WRITTEN ANNOTATION JOB INSTRUCTIONS AND NEW ANNOTATION JOB INSTRUCTIONS ARE WRITTEN
592

580

# FIG. 17

| MEDIA FULL TEXT DATA ACQUISITION IS PERFORMED BY THE DATA ACQUISITION MODULE <br> **602** |
|---|

↓

| ACQUIRED DATA IS THEN CLEANED AND ENRICHED BY THE DATA CLEANING MODULE <br> **604** |
|---|

600

↓

| DETERMINE LOCATION OF THE ENTITY NAME FOR WHICH THE REPUTATION IS SOUGHT, WITHIN THE ACQUIRED DATA <br> **606** |
|---|

↓

| DATA ACQUSITION MODULE FINDS NEW KWIC DATA WITH FOUND ENTITY NAME, AND EXTRACT NEW ENTITY NAME QUICK DATA WITH ENTITY NAME <br> **608** |
|---|

↓

| THE NEW ENRICHMENT DATA KWIC DATA AND ENRICHMENT DATA ITSELF IS STORED WITHIN THE STORAGE DEVICE <br> **610** |
|---|

↓

| LOCATION OF THE ENRICHMENT DATA ASSOCIATED WITH THE ENTITY WITHIN THE ACQUIRED DATA IS DETERMINED <br> **612** |
|---|

↓

| FIND NEW KWIC DATA WITH FOUND ENRICHMENT DATA AND EXTRACT BOTH <br> **614** |
|---|

↓

| NEW ENRICHMENT DATA KWIC DATA AND ENRICHMENT DATA IS STORED WITHIN THE STORAGE DEVICE <br> **616** |
|---|

↓

| NEW ENTITY NAME KWIC DATA AND NEW ENRICHMENT DATA KWIC DATA ARE INPUT INTO THE TRAINED NLP MODEL FOR NEW KWIC SENTIMENT VALUE <br> **618** |
|---|

# FIG. 18

632

ENTITY RELATED SENTIMENTS PER KWIC DATA-POINT
ARE RETRIEVED FROM THE STORAGE DEVICE
634

MEDIA REPUTATION DRIVER RAW SCORE IS
CALCULATED FOR THE ENTITY BY USING THE
SENTIMENTS PREVIOUSLY STORED OF THE KWICS FOR
THE ENTITY BY AGGREGATING POSITIVE AND NEGATIVE
SENTIMENTS AND NORMALIZING
636

APPLY WEIGHTING ALGORITHM TO RAW REPUTATION MEDIA
DRIVER SCORE IF NECESSARY
638

WEIGHTED MEDIA REPUTATION DRIVER SCORE IS
ALIGNED TO A NORMATIVE SCALE
640

STORE ENTITY REPUTATION MEDIA DRIVER SCORE TO
THE STORAGE DEVICE
642

# FIG. 19

DATA IS EXTRACTED THAT WILL BE USED IN TRAINING A
SUPERVISED MACHINE LEARNING MODEL
702

TRAIN MACHINE LEARNING MODEL
704

700

TRAINING OF THE MODEL CONTINUES UNTIL A DESIRED LEVEL OF ACCURACY IS
OBTAINED
706

SAVE TRAINED MODEL
708

USE TRAINED MODEL TO PREDICT IMPACT OF THE MEDIA REPUTATION OF THE
ENTITY ON THE SAME ENTITY'S PERCEPTION REPUTATION PER TIME INTERVAL
710

# FIG. 20

750

AN EXTRACTION OF DATA THAT WILL BE USED FOR TRAINING THE SUPERVISED MACHINE LEARNING MODEL IS PERFORMED, WHEREIN THE EXTRACTED DATA INCLUDES, AS THE INPUT VARIABLES PERCEPTION REPUTATION SCORES AND WEIGHTS PREVIOUSLY CALCULATED, AND AS THE OUTPUT DEPENDENT VARIABLE THE MEDIA REPUTATION SCORES PREVIOUSLY CALCULATED
752

SUPERVISED MACHINE LEARNING MODEL IS THEN TRAINED USING THE HISTORICAL DATA OF PREVIOUSLY CALCULATED PERCEPTION REPUTATION SCORES AND WEIGHTS AS INPUT VARIABLES AND HISTORICAL PREVIOUSLY DETERMINED MEDIA REPUTATION SCORES AS DEPENDENT OUTPUT VARIABLES
754

TRAINING OF THE MODEL CONTINUES UNTIL A DESIRED LEVEL OF ACCURACY IS RECEIVED
756

THE TRAINED MODEL IS THEN SAVED WITHIN THE REPUTATION SERVER
758

TRAINED MODELS MAY THEN BE USED IN ACCORDANCE WITH A PREDEFINED TIME INTERVAL TO PREDICT IMPACT OF THE PERCEPTION REPUTATION ON MEDIA REPUTATION OF THE ENTITY
760

# FIG. 21

Europäisches
Patentamt
European
Patent Office
Office européen
des brevets

## EUROPEAN SEARCH REPORT

Application Number

EP 22 15 7068

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/286676 A1 (FATZINGER LEIGH [US]) 19 September 2019 (2019-09-19) * paragraph [0020] - paragraph [0072] * * figures 1-11 * | 1-15 | INV. G06Q30/02 G06N20/00 |
| A | US 2017/249389 A1 (BROVINSKY GILAD [IL] ET AL) 31 August 2017 (2017-08-31) * paragraph [0008] - paragraph [0230] * * figures * | 1-15 | |
| A | US 2020/074294 A1 (LONG RYAN [US] ET AL) 5 March 2020 (2020-03-05) * paragraph [0024] - paragraph [0179] * * figures * | 1-15 | |
| A | US 2013/317808 A1 (KRUEL CHACHI [US] ET AL) 28 November 2013 (2013-11-28) * paragraph [0033] - paragraph [0132] * * figures * | 1-15 | |

| TECHNICAL FIELDS SEARCHED (IPC) |
|---|
| G06Q G06N |

The present search report has been drawn up for all claims

| Place of search | Date of completion of the search | Examiner |
|---|---|---|
| The Hague | 13 June 2022 | Rachkov, Vassil |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## EP 4 044 094 A1

## ANNEX TO THE EUROPEAN SEARCH REPORT
## ON EUROPEAN PATENT APPLICATION NO.

EP 22 15 7068

13-06-2022

| Patent document cited in search report | | Publication date | Patent family member(s) | | Publication date |
|---|---|---|---|---|---|
| US 2019286676 | A1 | 19-09-2019 | US | 2019286676 A1 | 19-09-2019 |
| | | | WO | 2019178582 A1 | 19-09-2019 |
| US 2017249389 | A1 | 31-08-2017 | AU | 2015310494 A1 | 23-03-2017 |
| | | | CA | 2959835 A1 | 10-03-2016 |
| | | | CN | 107077486 A | 18-08-2017 |
| | | | EP | 3189449 A2 | 12-07-2017 |
| | | | US | 2017249389 A1 | 31-08-2017 |
| | | | WO | 2016035072 A2 | 10-03-2016 |
| US 2020074294 | A1 | 05-03-2020 | NONE | | |
| US 2013317808 | A1 | 28-11-2013 | US | 2013317808 A1 | 28-11-2013 |
| | | | WO | 2013177280 A1 | 28-11-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 17627121

- US 30639721